# EUROPEAN PATENT APPLICATION

(11) **EP 4 679 858 A1**
(43) Date of publication of application: **14.01.2026**
(21) Application number: 24770421.6
(22) Date of filing: 20.02.2024
(51) Int. Cl.: H04Q 9/00, B25J 5/00, B25J 13/00, B25J 13/06, G05D 1/00, G06Q 50/10

(54) **INFORMATION PROCESSING DEVICE, REMOTE OPERATION CONTROL METHOD, REMOTE OPERATION CONTROL SYSTEM, AND AUTONOMOUS MOBILE BODY**

(30) Priority: 10.03.2023 JP 2023037370
(71) Applicant: Sony Group Corporation, Tokyo 108-0075 (JP)
(72) Inventor: SODEYAMA Yoshinao, Tokyo 108-0075 (JP)
(74) Representative: D Young & Co LLP
(86) International application number: PCT/JP2024/005917
(87) International publication number: WO 2024/190308

(57) **Abstract**

The present technology relates to an information processing apparatus, a remote operation control method, a remote operation control system, and an autonomous mobile body that enable efficient execution of remote operation of the autonomous mobile body.

The information processing apparatus according to the present technology includes: a matching unit that performs matching of, among tasks obtained by decomposing an action of an autonomous mobile body, a non-autonomous task that is the task not autonomously performed by the autonomous mobile body with a remote operator who performs a remote operation of the non-autonomous task; and a remote control unit that controls the remote operation of the non-autonomous task by the remote operator. The present technology can be applied to, for example, a robot.

## Description

### TECHNICAL FIELD

The present technology relates to an information processing apparatus, a remote operation control method, a remote operation control system, and an autonomous mobile body, and more particularly to an information processing apparatus, a remote operation control method, a remote operation control system, and an autonomous mobile body that are suitable for use in a case where remote operation of the autonomous mobile body is performed.

### BACKGROUND ART

In recent years, research and development of a system for remotely operating a robot have been conducted (see, for example, Patent Document 1).

### CITATION LIST

### PATENT DOCUMENT

Patent Document 1: Japanese Patent Application Laid-Open No. 2012-230506

### SUMMARY OF THE INVENTION

### PROBLEMS TO BE SOLVED BY THE INVENTION

However, for example, in the invention described in Patent Document 1, because one remote operator is required for one robot, it is assumed that the burden on the remote operator increases and the work efficiency decreases.

The present technology has been made in view of such a situation, and an object is to enable efficient execution of remote operation of an autonomous mobile body such as a robot.

### SOLUTIONS TO PROBLEMS

An information processing apparatus according to a first aspect of the present technology includes: a matching unit that performs matching of, among tasks obtained by decomposing an action of an autonomous mobile body, a non-autonomous task that is the task not autonomously performed by the autonomous mobile body with a remote operator who performs a remote operation of the non-autonomous task; and a remote control unit that controls the remote operation of the non-autonomous task by the remote operator.

An information processing method according to the first aspect of the present technology causes an information processing apparatus to perform: matching of, among tasks obtained by decomposing an action of an autonomous mobile body, a non-autonomous task that is the task not autonomously performed by an autonomous mobile body with a remote operator who performs a remote operation of the non-autonomous task; and control of the remote operation of the non-autonomous task by the remote operator.

An information processing system according to a second aspect of the present technology includes a plurality of autonomous mobile bodies and an information processing apparatus, in which the information processing apparatus includes: a matching unit that performs matching of, among tasks obtained by decomposing an action of each of the autonomous mobile bodies, a non-autonomous task that is the task not autonomously performed by the autonomous mobile body with a remote operator who performs a remote operation of the non-autonomous task; and a remote control unit that controls the remote operation of the non-autonomous task by the remote operator.

An autonomous mobile body according to a third aspect of the present technology includes: an action planning unit that decomposes an action to be executed into a plurality of tasks; and an action control unit that controls autonomous execution of an autonomous task that is autonomously executed among the tasks and controls execution of a non-autonomous task that is not autonomously executed among the tasks by remote operation.

In the first aspect of the present technology, among tasks obtained by decomposing an action of an autonomous mobile body, a non-autonomous task that is the task not autonomously performed by the autonomous mobile body is matched with a remote operator who performs a remote operation of the non-autonomous task, and the remote operation of the non-autonomous task by the remote operator is controlled.

In the second aspect of the present technology, among tasks obtained by decomposing an action of each of autonomous mobile bodies, a non-autonomous task that is the task not autonomously performed by the autonomous mobile body is matched with a remote operator who performs a remote operation of the non-autonomous task, and the remote operation of the non-autonomous task by the remote operator is controlled.

In the third aspect of the present technology, an action to be executed is decomposed into a plurality of tasks, and autonomous execution of an autonomous task that is autonomously executed among the tasks and execution of a non-autonomous task that is not autonomously executed among the tasks by remote operation are controlled.

### BRIEF DESCRIPTION OF DRAWINGS

Fig. 1 is a diagram for describing an overview of the present technology.
Fig. 2 is a block diagram illustrating a configuration example of a remote operation control system to which the present technology is applied.
Fig. 3 is a block diagram illustrating a functional configuration example of a robot.
Fig. 4 is a block diagram illustrating a configuration example of an appearance of the robot.
Fig. 5 is a block diagram illustrating a functional configuration example of a server.
Fig. 6 is a flowchart for explaining processing in the robot.
Fig. 7 is a flowchart for explaining details of task execution control processing.
Fig. 8 is a flowchart for explaining processing in the server.
Fig. 9 is a view for explaining an example in which the robot executes an action of measuring a vital value of a nursing care target person.
Fig. 10 is a view for explaining an example in which the robot executes an action of measuring a vital value of the nursing care target person.
Fig. 11 is a view for describing an example in which the robot executes an action of measuring a vital value of the nursing care target person.
Fig. 12 is a view for describing an example in which the robot executes an action of measuring a vital value of the nursing care target person.
Fig. 13 is a diagram illustrating a calculation formula of an operation effect of the remote operation control system.
Fig. 14 is a diagram illustrating an example of calculation of the operation effect of the remote operation control system.
Fig. 15 is a block diagram illustrating a configuration example of a computer.

### MODE FOR CARRYING OUT THE INVENTION

Hereinafter, an embodiment of the present technology will be described in detail with reference to the drawings. Note that the description will be given in the following order.
0. Background of present technology
1. Embodiment
2. Modifications
3. Others

### <<0. Background of present technology>>

In a nursing care facility such as a nursing home for the aged, there is a problem of labor shortage, and introduction of a robot for nursing care (hereinafter, referred to as a nursing care robot) that executes various types of care for a user of the nursing care facility is desired.

However, an autonomous robot that can stably execute multiple tasks requiring hospitality in an unstructured environment in which a person and a robot coexist, such as the nursing care facility, has not yet been implemented.

For example, it is difficult for a conventional autonomous robot to appropriately adapt to a dynamically changing environment or appropriately interact with each of the users having different characteristics. Specifically, for example, the conventional autonomous robot cannot continue running only by the presence of an unknown obstacle (for example, a power cord, a cardboard box, or the like) on a path. For example, in the conventional autonomous robot, when the position of an object such as a table or a chair in a room changes, the robot loses a target point and cannot perform navigation. For example, because a user in a facility for the aged has characteristics of speaking unclearly and at low volume, the conventional autonomous robot has a low recognition rate for a voice of the user in the facility for the aged.

On the other hand, it is conceivable that a remote operator remotely operates the robot in real time to make the robot execute an action or interaction with hospitality.

However, because a conventional remote operation type robot occupies one remote operator, work efficiency of the remote operator becomes low and the necessary cost increases. Therefore, workability can be increased and the cost can be reduced more by having one person to work than the remote operation type robot to work.

Depending on environmental conditions, one remote operator can operate a plurality of remote operation type robots, but there is a limit to the number of operable remote operation type robots, and the remote operator needs to be highly skilled.

On the other hand, in the present technology, an action of the robot is subdivided into a plurality of micro-level tasks (hereinafter, referred to as microtasks), the robot autonomously executes a task within a possible range, and a task that is difficult for the robot to autonomously execute is executed by remote operation.

Note that, hereinafter, a task that the robot autonomously executes is referred to as an autonomous task, and a task that the robot does not autonomously execute is referred to as a non-autonomous task.

Here, the microtask is, for example, a task that is subdivided to a level irrelevant to a context (for example, the background or the surrounding environment) in which the robot executes an action, and is a task that does not need an advanced operation skill.

Furthermore, the robot includes a module specialized for one type of skill (corresponding to one skill) (hereinafter, referred to as a task execution module), and each task execution module independently executes a task related to each type of skill. With this arrangement, the remote operator can make the robot execute a task related to a skill that each of the remote operators can handle by remotely operating the task execution module specialized for the skill.

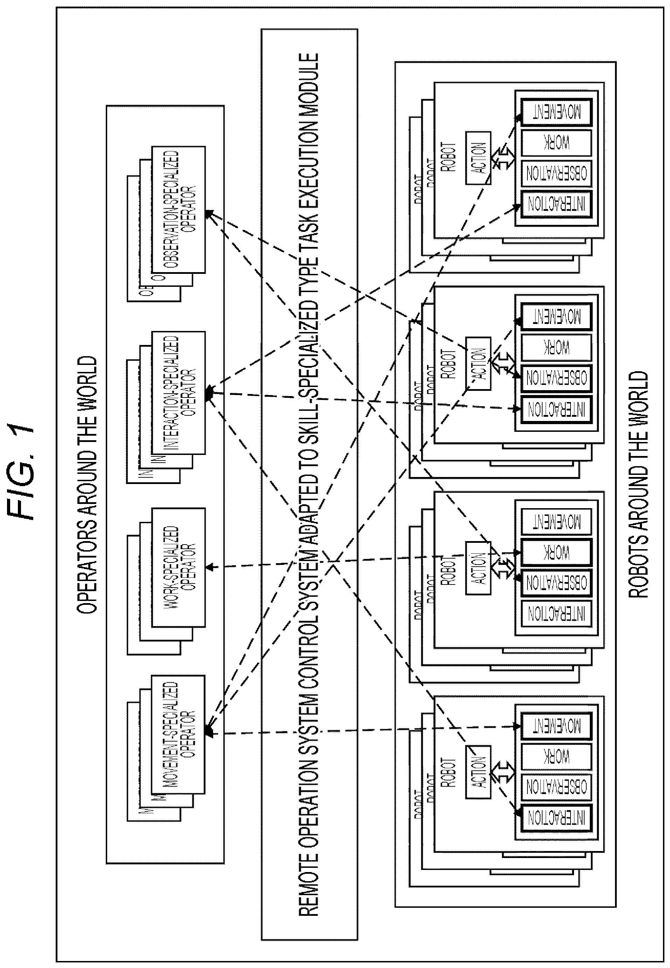

With this arrangement, for example, as illustrated in Fig. 1, a remote operation control system corresponding to a skill-specialized task execution module is implemented.

In the example in Fig. 1, a robot includes five types of modules including an action module, an interaction module, an observation module, a work module, and a movement module. Among the above modules, four types, which are the interaction module, the observation module, the work module, and the movement module, are skill-specialized task execution modules (hereinafter, simply referred to as task execution modules).

The action module is a module that controls an action of the entire robot. For example, the action module creates a plan of an action of the entire robot, decomposes each action into tasks, and causes a corresponding task execution module to execute each task to make the robot execute the planned action.

The interaction module is a module that executes interaction processing of the robot autonomously or by remote operation. For example, the interaction module interacts with a person and executes processing of communicating information, mutual understanding, and the like.

The observation module is a module that executes observation processing of the robot autonomously or by remote operation. For example, the observation module observes the surroundings of the robot, and executes processing of recognizing a surrounding state such as a surrounding object (including a living organism such as a person) or an environment.

The work module is a module that executes work processing of the robot autonomously or by remote operation. For example, the work module executes work using a portion such as a hand of the robot. Specifically, for example, the work module executes operation, movement, creation, processing, and the like of various objects, and a motion such as a gesture of the robot by using the portion of the robot.

The movement module is a module that executes movement processing of the robot autonomously or by remote operation. For example, the movement module executes processing of moving the robot by using a movement portion such as legs or wheels of the robot.

Then, for example, an interaction-specialized operator who performs a specialized remote operation for "interaction", an observation-specialized operator who performs a specialized remote operation for "observation", a work-specialized operator who performs a specialized remote operation for "work", and a movement-specialized operator who performs a specialized remote operation for "movement" perform the remote operation of the robot by using the task execution module of the corresponding skill of each robot.

Note that, hereinafter, the interaction-specialized operator, the observation-specialized operator, the work-specialized operator, and the movement-specialized operator are also referred to as an interaction operator, an observation operator, a work operator, and a movement operator, respectively.

Note that an operator having a plurality of types of skills can also perform the remote operation for the plurality of skills.

Furthermore, although not illustrated, an action operator who can remotely operate the entire robot performs the remote operation for, for example, an action of the entire robot or the remote operation for a task that is inseparable from the context or a task including a plurality of skills by using the action module. For example, the action operator designs an action rule of autonomous action control of the robot, and performs the remote operation for the action of the entire robot by using the action module in a case where it is difficult for the action module to autonomously execute the action task of the entire robot.

The action operator is an operator who can operate a top-level action of the robot, and for example, needs to have a special authority. For example, an employee of a company that provides a robot service, an employee of a commercial facility that introduces and operates a robot, and the like are the action operators. For example, in a case of the nursing care robot, for example, a staff member of a nursing care facility that introduces and operates the nursing care robot, a staff member of a visiting nursing care service provider that introduces and operates the nursing care robot, a family member of a user who receives at-home care by the nursing care robot, and the like are the action operators.

Note that the action operator can also perform the remote operation for a specific skill of the robot by using the task execution module as the interaction operator, the observation operator, the work operator, or the movement operator.

As described above, an architecture is implemented in which operators around the world can perform the remote operation specialized for skills possessed by the operators on the robots around the world.

For example, each operator can remotely operate only a part of tasks of each robot. For example, each operator can remotely operate a plurality of robots in parallel in accordance with the skills possessed by the operator. For example, a plurality of operators can remotely operate one robot in cooperation. For example, each robot can receive the support of the operator only for a task that is difficult for the robot to autonomously execute.

With this arrangement, the robots around the world can efficiently take action by effectively utilizing skills and time of the operators around the world. Furthermore, the hospitality of each robot is improved. That is, each robot can stably execute multiple tasks demanding hospitality.

### << 1. Embodiment >>

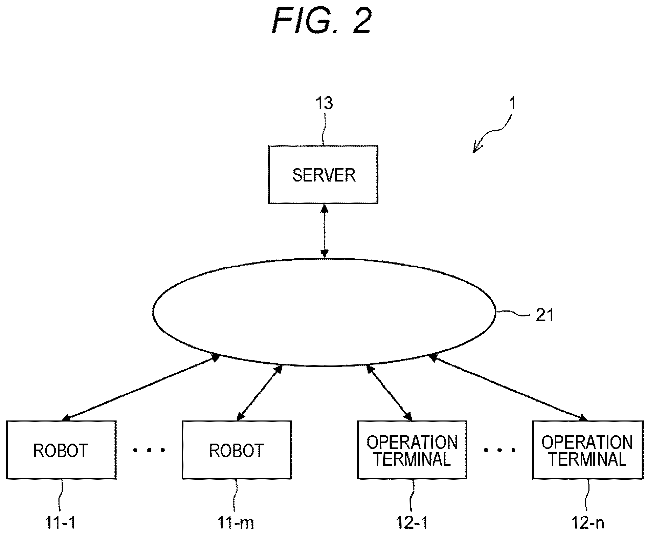

Next, an embodiment of the present technology will be described with reference to Figs. 2 to 14.

### <Configuration example of remote operation control system 1>

Fig. 2 illustrates a configuration example of a remote operation control system 1 to which the present technology is applied.

The remote operation control system 1 is a system that controls the remote operation of a robot 11-1 to a robot 11-m.

The remote operation control system 1 includes the robot 11-1 to the robot 11-m, an operation terminal 12-1 to an operation terminal 12-n, and a server 13. The robot 11-1 to the robot 11-m, the operation terminal 12-1 to the operation terminal 12-n, and the server 13 are connected to each other via a network 21 and can communicate with each other.

Hereinafter, in a case where it is not necessary to individually distinguish the robot 11-1 to the robot 11-m, the robot is simply referred to as the robot 11. Hereinafter, in a case where it is not necessary to individually distinguish the operation terminal 12-1 to the operation terminal 12-n, the operation terminal is simply referred to as the operation terminal 12.

Each robot 11 corresponds to the robot described above with reference to Fig. 1. The robot 11 can autonomously take an action and execute a task that is difficult to execute autonomously in accordance with remote operation using the operation terminal 12.

Note that the form of the robot 11 is not particularly limited. For example, the robot 11 may be an autonomously movable robot, a manipulator that executes work by moving a portion such as a hand at a fixed place, or the like. For example, the robot may be a robot of a human type or another living organism type, or may be a robot that executes specific work. For example, the robot 11 may present a character or the like by three-dimensional computer graphics (CG) or the like on a display including a sensor or a speaker.

The operation terminal 12 is a terminal (information processing apparatus) used by each remote operator to perform the remote operation of each robot 11. The form of the operation terminal 12 is not particularly limited. For example, a smartphone, a personal computer (PC), a tablet terminal, a game terminal, a dedicated operation terminal, or the like is used as the operation terminal 12. For example, the operation terminal 12 may not only be a terminal operated with the hand but also an operation terminal operated with a portion other than the hand or a terminal operated in a non-contact manner using speech recognition, line-of-sight recognition, or the like.

The server 13 controls the remote operation of each robot by each remote operator. For example, the server 13 performs matching of a non-autonomous task of each robot 11 with each remote operator. For example, the server 13 enables cooperation between the robot 11 and the operation terminal 12 of the remote operator that are matched with each other via the network 21, and executes processing necessary for the remote operation, data mediation, and the like between the robot 11 and the operation terminal 12.

### <Configuration example of robot 11>

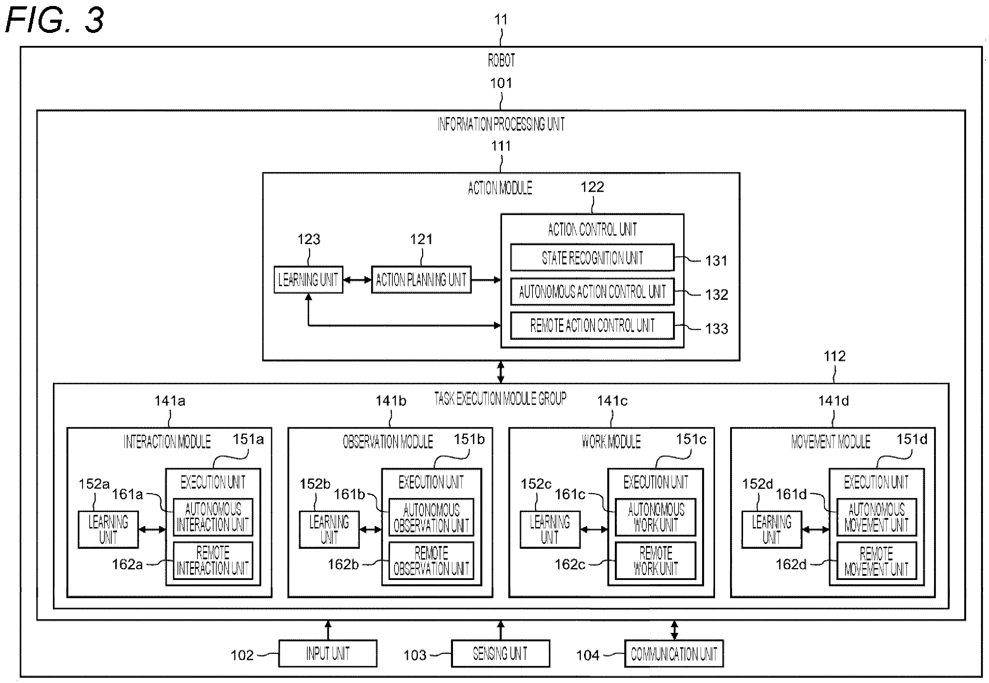

Fig. 3 illustrates a functional configuration example of the robot 11.

The robot 11 includes an information processing unit 101, an input unit 102, a sensing unit 103, and a communication unit 104.

The information processing unit 101 includes an action module 111 and a task execution module group 112.

The action module 111 is a module that controls an action of the entire robot 11. The action module 111 includes an action planning unit 121, an action control unit 122, and a learning unit 123.

The action planning unit 121 creates a plan of the action of the entire robot 11 on the basis of a preset schedule, a command from the outside, a state around the robot 11 recognized by a state recognition unit 131 of the action module 111, and the like. Furthermore, the action planning unit 121 subdivides the action of the robot 11 into micro-level tasks (microtasks).

Each task is classified into a task related to interaction processing in the robot 11 (hereinafter, referred to as an interaction task), a task related to observation processing in the robot 11 (hereinafter, referred to as an observation task), a task related to work processing in the robot 11 (hereinafter, referred to as a work task), and a task related to movement processing in the robot 11 (hereinafter, referred to as a movement task).

The interaction task is, for example, a task related to processing in which the robot 11 interacts with a person and performs information communication, mutual understanding, and the like.

The observation task is, for example, a task related to processing of observing the surroundings of the robot 11 and recognizing a surrounding state such as a surrounding object (including a living organism such as a person) or an environment.

The work task is, for example, a task related to processing of executing operation, movement, creation, processing, and the like of various objects and a motion such as a gesture of the robot 11 by using each portion of the robot 11.

The movement task is, for example, a task related to processing of moving the robot 11 by using a movement portion such as legs or wheels of the robot 11.

The action control unit 122 controls an action of the entire robot 11. The action control unit 122 includes the state recognition unit 131, an autonomous action control unit 132, and a remote action control unit 133.

The state recognition unit 131 recognizes a state around the robot 11 or the like on the basis of input data from the input unit 102, sensing data output from the sensing unit 103, an observation result of an observation module 141b, and the like. For example, the state recognition unit 131 recognizes an inner state such as emotion or intention of a person around the robot 11.

The autonomous action control unit 132 controls autonomous execution of the action of the robot 11. For example, the autonomous action control unit 132 controls execution of an autonomous task of the robot 11 by controlling the task execution module group 112.

The remote action control unit 133 controls execution of the action by remote operation of the robot 11. For example, the remote action control unit 133 controls the task execution module group 112 to control execution of a non-autonomous task by remote operation of the robot 11. Furthermore, the remote action control unit 133 controls the action of the entire robot 11 by remote operation by the action operator described above on the basis of remote operation content information indicating content of the remote operation transmitted from the server 13.

The learning unit 123 learns a method of autonomously executing the action on the basis of execution content (for example, operation content, an execution result, and the like) of the action of the robot 11 by remote operation. Furthermore, the learning unit 123 learns a method of autonomously executing an action in accordance with the intention of the user on the basis of, for example, the intention, reaction, or the like of the user recognized by the state recognition unit 131.

Note that, for example, by the action module 111 (autonomous action control unit 132) growing by learning based on the intention, reaction, or the like of the user, the user oneself can finally become the action operator. With this arrangement, for example, a user who is difficult to lead an autonomous life, such as a disabled person or a dementia patient, can become the action operator, coexist with the robot 11, and lead the autonomous life.

An interaction module 141a is a module that executes the interaction task autonomously or by remote operation. The interaction module 141a includes an execution unit 151a and a learning unit 152a. The execution unit 151a includes an autonomous interaction unit 161a and a remote interaction unit 162a.

The autonomous interaction unit 161a autonomously executes the interaction task.

The remote interaction unit 162a executes the interaction task by remote operation on the basis of the remote operation content information indicating the content of the remote operation transmitted from the server 13.

The learning unit 152a learns a method of autonomously executing the interaction task on the basis of execution content (for example, operation content, an execution result, and the like) of the interaction task by remote operation.

The observation module 141b is a module that executes the observation task autonomously or by remote operation. The observation module 141b includes an execution unit 151b and a learning unit 152b. The execution unit 151b includes an autonomous observation unit 161b and a remote observation unit 162b.

The autonomous observation unit 161b autonomously executes the observation task.

The remote observation unit 162b executes the observation task by remote operation on the basis of the remote operation content information transmitted from the server 13.

The learning unit 152b learns a method of autonomously executing the observation task on the basis of execution content (for example, operation content, an execution result, and the like) of the observation task by remote operation.

A work module 141c is a module that executes the work task autonomously or by remote operation. The work module 141c includes an execution unit 151c and a learning unit 152c. The execution unit 151c includes an autonomous work unit 161c and a remote work unit 162c.

The autonomous work unit 161c autonomously executes the work task.

The remote work unit 162c executes the work task by remote operation on the basis of the remote operation content information transmitted from the server 13.

The learning unit 152c learns a method of autonomously executing the work task on the basis of execution content (for example, operation content, an execution result, and the like) of the work task by remote operation.

A movement module 141d is a module that executes the movement task autonomously or by remote operation. The movement module 141d includes an execution unit 151d and a learning unit 152d. The execution unit 151d includes an autonomous movement unit 161d and a remote movement unit 162d.

The autonomous movement unit 161d autonomously executes the movement task.

The remote movement unit 162d executes the movement task by remote operation on the basis of the remote operation content information transmitted from the server 13.

The learning unit 152d learns a method of autonomously executing the movement task on the basis of execution content (for example, operation content, an execution result, and the like) of the movement task by remote operation.

The input unit 102 includes an input device used for inputting various types of input data such as a command and data. The input unit 102 supplies the input data to the information processing unit 101.

The sensing unit 103 includes, for example, various sensors that sense the surroundings of the robot 11, such as a camera, a light detection and ranging (LiDAR), a radar, and a microphone, and various sensors that sense the state of the robot 11. The sensing unit 103 supplies sensor data output from each sensor to the information processing unit 101.

The communication unit 104 communicates with the operation terminal 12 and the server 13 via the network 21. The communication unit 104 supplies received data to the information processing unit 101, and acquires data to be transmitted from the information processing unit 101.

Hereinafter, in a case where it is not necessary to individually distinguish the interaction module 141a to the movement modules 141d, the interaction module is referred to as the task execution module 141. Hereinafter, in a case where it is not necessary to individually distinguish the execution unit 151a of the interaction module 141a to the execution unit 151d of the movement module 141d, the execution module is simply referred to as the execution unit 151. Hereinafter, in a case where it is not necessary to individually distinguish the learning unit 152a of the interaction module 141a to the learning unit 152d of the movement module 141d, the learning unit is simply referred to as the learning unit 152. Hereinafter, in a case where it is not necessary to individually distinguish the autonomous interaction unit 161a, the autonomous observation unit 161b, the autonomous work unit 161c, and the autonomous movement unit 161d, the concerned unit is referred to as the autonomous task execution unit 161. Hereinafter, in a case where it is not necessary to individually distinguish the remote interaction unit 162a, the remote observation unit 162b, the remote work unit 162c, and the remote movement unit 162d, the concerned unit is referred to as the remote task execution unit 162.

Note that each task execution module 141 includes necessary hardware and software, and can independently execute a task. Furthermore, the hardware and software included in each task execution module 141 can be shared with other task execution modules 141.

### <Configuration example of appearance of robot 11>

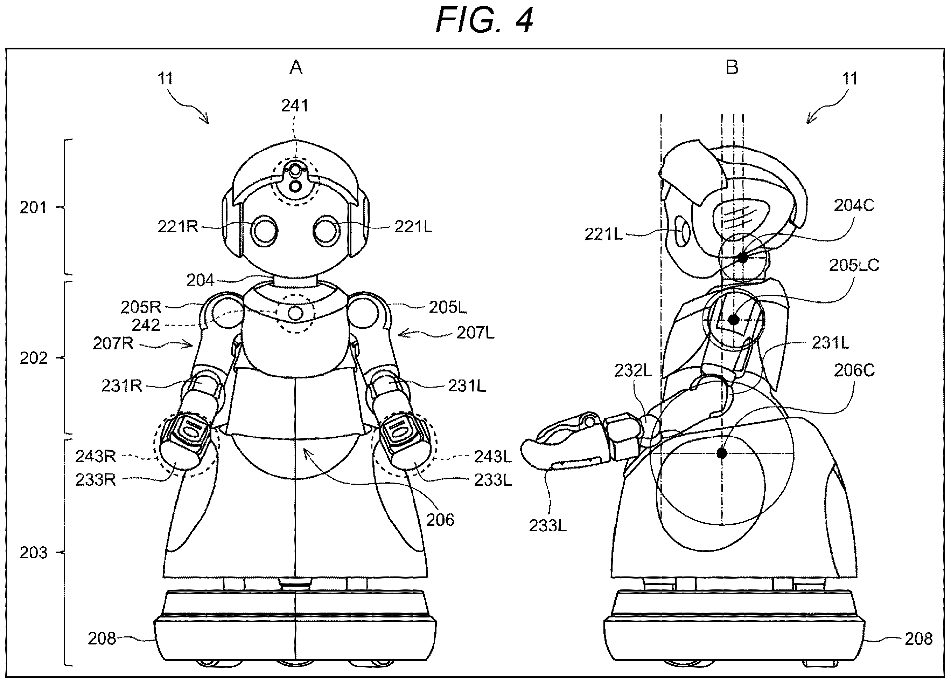

Fig. 4 illustrates a configuration example of an appearance of the robot 11. A of Fig. 4 is a front view of the robot 11. B of Fig. 4 is a left side view of the robot 11.

The robot 11 is a humanoid mobile manipulator robot that can execute various applications for various types of care, state observation, communication, peripheral tasks, and the like with highly acceptable quality to a nursing care target person.

The robot 11 includes a head portion 201, a chest portion 202, and a base portion 203 that supports the chest portion 202. The base portion 203 includes, for example, a carriage 208 that is movable in all directions, at a lower part of the base portion 203. With this arrangement, the robot 11 can move in all directions.

The robot 11 includes an arm portion 207L attached to an upper-left portion of the chest portion 202, and an arm portion 207R attached to an upper-right portion of the chest portion 202. The robot 11 includes a movable neck 204 provided between the head portion 201 and the chest portion 202 and including a neck joint shaft 204C. The robot 11 includes a movable shoulder 205L provided between the chest portion 202 and the arm portion 207L and including a shoulder joint shaft 205LC, and a movable shoulder 205R provided between the chest portion 202 and the arm portion 207R and including a shoulder joint shaft 205RC. Furthermore, the robot 11 includes a movable waist 206 provided below the chest portion 202 and including a waist joint shaft 206C.

The head portion 201 includes an eyeball portion 221L and an eyeball portion 221R. For example, the robot 11 controls the position of a black eye portion of the eyeball portion 221L, the position of a black eye portion of the eyeball portion 221R, and the axis of the neck 204 (roll, pitch, and yaw) to gaze at the target person.

Note that, hereinafter, in a case where it is not necessary to individually distinguish the eyeball portion 221L and the eyeball portion 221R, the eyeball portion is simply referred to as the eyeball portion 221.

The arm portion 207L includes an elbow portion 231L, a wrist 232L, and a hand 233L. The elbow portion 231L has a pitch axis. The wrist 232L has a yaw axis.

The arm portion 207R is configured similarly to the arm portion 207L, and includes an elbow portion 231R, a wrist 232R, and a hand 233R.

Hereinafter, in a case where it is not necessary to individually distinguish the arm portion 207L and the arm portion 207R, the arm portion is simply referred to as the arm portion 207. Hereinafter, in a case where it is not necessary to individually distinguish the elbow portion 231L and the elbow portion 231R, the elbow portion is simply referred to as the elbow portion 231. Hereinafter, in a case where it is not necessary to individually distinguish the wrist 232L and the wrist 232R, the wrist is simply referred to as the wrist 232. Hereinafter, in a case where it is not necessary to individually distinguish the hand 233L and the hand 233R, the hand is simply referred to as the hand 233.

The head sensor 241 is provided at an upper front part of the head portion 201. The head sensor 241 includes, for example, a distance image sensor, a microphone, a LiDAR, or the like. The head sensor 241 is configured in a manner that a sensing direction is substantially the same as a line-of-sight direction of the robot 11. For example, the robot 11 can perform human recognition and face recognition by the head sensor 241.

A chest sensor 242 is provided at an upper front part of the chest portion 202. The chest sensor 242 includes, for example, a non-contact type vital sensor or the like. As the non-contact type vital sensor, there is, for example, a body temperature sensor, a heart rate sensor, a respiration sensor, or the like.

A hand sensor 243L is provided in the hand 233L. The hand sensor 243L includes, for example, a contact type vital sensor or the like. As the contact type vital sensor, there is, for example, a heart rate sensor, a blood pressure sensor, an oxygen saturation measurement sensor, or the like.

Furthermore, vital sensing can be performed in a manner in which the target person places one's hand on or holds the hand sensor 243L, instead of the robot 11 touching the target person with the hand sensor 243L by itself. This is an interface familiar to a dementia patient, and acceptability for the target person is high.

A hand sensor 243R similar to the hand sensor 243L is also provided in the hand 233R.

Note that, hereinafter, in a case where it is not necessary to individually distinguish the hand sensor 243L and the hand sensor 243R, the hand sensor is simply referred to as the hand sensor 243.

### <Configuration example of server 13>

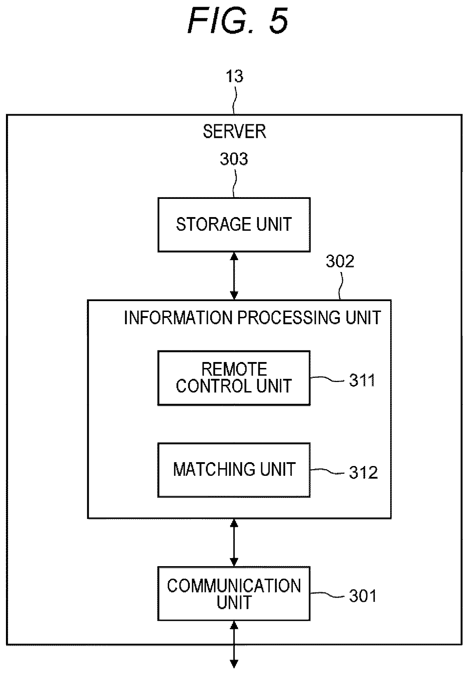

Fig. 5 illustrates a functional configuration example of the server 13.

The server 13 includes a communication unit 301, an information processing unit 302, and a storage unit 303. The information processing unit 302 includes a remote control unit 311 and a matching unit 312.

The communication unit 301 communicates with each robot 11 and each operation terminal 12 via the network 21. The communication unit 301 supplies received data to the information processing unit 302, and acquires data to be transmitted from the information processing unit 302.

The remote control unit 311 controls the remote operation of the robot 11 using the operation terminal 12 by each remote operator.

For example, the remote control unit 311 receives, from the robot 11 via the network 21 and the communication unit 301, task request information including information regarding a task for which remote operation is requested. The remote control unit 311 transmits, via the communication unit 301 and the network 21, the task request information to the operation terminal 12 of the remote operator selected by the matching unit 312.

For example, the remote control unit 311 receives, from the robot 11 via the network 21 and the communication unit 301, remote operation provision information including information necessary for remote operation. For example, the remote control unit 311 generates remote operation user interface (UI) for providing a user interface for remote operation (hereinafter, referred to as the remote operation UI) on the basis of the remote operation provision information. The remote control unit 311 transmits, via the communication unit 301 and the network 21, the remote operation UI information to the operation terminal 12 of the remote operator in charge of the remote operation.

For example, the remote control unit 311 receives the remote operation content information from the operation terminal 12 via the network 21 and the communication unit 301, and as necessary, converts the remote operation content information into one adapted for the robot 11 to be a remote operation target. The remote control unit 311 transmits the remote operation content information to the robot 11 to be the remote operation target via the communication unit 301 and the network 21.

For example, the remote control unit 311 receives a task execution result notification signal for notifying of a result of execution of a task by remote operation from the robot 11 via the network 21 and the communication unit 301, and transmits the task execution result notification signal to the operation terminal 12 of the remote operator in charge of the remote operation. The task execution result notification signal is divided into, for example, a task completion notification signal for notifying of completion of the task and a task failure notification signal for notifying of failure of the task.

The matching unit 312 executes matching processing of non-autonomous tasks of a plurality of the robots 11 with a plurality of remote operators. For example, the matching unit 312 selects a remote operator to be requested to perform the remote operation for a task on the basis of the task request information received from the robot 11 and a remote operator database and a task database stored in the storage unit 303. The matching unit 312 updates the remote operator database and the task database stored in the storage unit 303 as necessary on the basis of a remote operation result notification signal.

The storage unit 303 stores various types of data necessary for processing in the server 13. For example, the storage unit 303 stores the remote operator database and the task database.

The remote operator database includes, for example, data regarding an attribute, a characteristic, a schedule, an environment, and a remote operation history of each remote operator.

The attribute of the remote operator includes name, age, sex, nationality, occupation, and the like of the remote operator.

The characteristic of the remote operator includes, for example, a skill, a skill level, a language used, and the like of the remote operator.

The schedule of the remote operator includes, for example, information regarding a schedule on which the remote operator can perform the remote operation of the robot 11.

The environment of the remote operator includes, for example, information regarding an environment in which the remote operator performs the remote operation. For example, the environment of the remote operator includes the form and performance of the operation terminal 12 used by the remote operator, the position coordinates on the earth, a time, and the like.

The remote operation history includes, for example, a date and time when the remote operation of the robot was performed in the past, content of the task, an execution result, and the like.

The task database includes, for example, data regarding content of each task, a difficulty level, an environment necessary for remote operation, and the like.

### <Processing of remote operation control system 1>

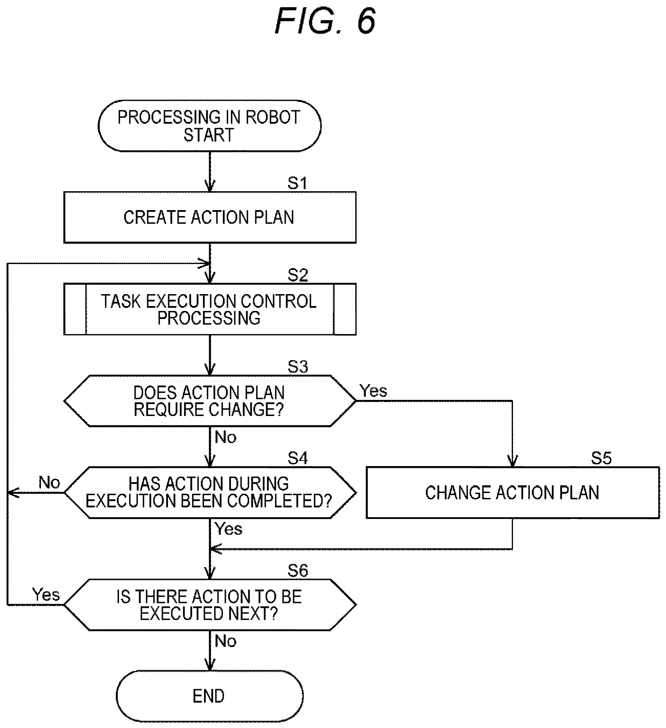

Next, processing in the remote operation control system 1 will be described with reference to Figs. 6 to 8.

### <Processing in robot 11>

First, processing in the robot 11 will be described with reference to the flowchart in Fig. 6.

This processing is started, for example, in a case where a trigger for the robot 11 to start a certain action is generated. For example, in a case where it is time to start a predetermined action in a preset schedule, or in a case where a command to execute a certain action is given from the outside, the robot 11 starts this processing.

In step S1, the action planning unit 121 creates an action plan. For example, the action planning unit 121 creates a plan for a series actions necessary for achieving a given purpose.

Note that a method of creating the action plan is not particularly limited. For example, the action planning unit 121 may autonomously create the action plan, create the action plan on the basis of information given from the outside, or create the action plan on the basis of an interaction with the user.

Furthermore, for example, the action planning unit 121 may apply an action plan given from the outside, or in a case where a plurality of action plans is given, the action planning unit 121 may select an action plan from among the plurality of action plans. As the action plan given from the outside, for example, an action plan designed in advance by a business operator of the remote operation control system 1, an action plan created by the user of the robot 11, an action plan created by the action operator, or the like is assumed.

The action planning unit 121 decomposes each action into a plurality of tasks. At this time, each action is decomposed into a plurality of tasks as much as possible until each task becomes a micro-level irrelevant to a context in which the action is executed.

In step S2, the robot 11 executes task execution control processing.

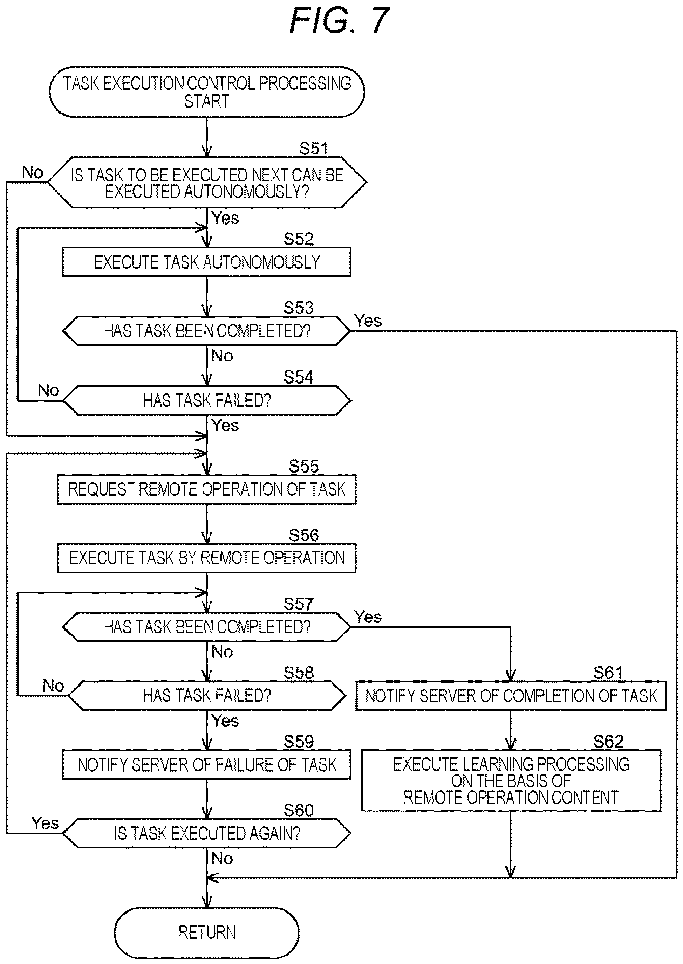

Here, details of the task execution control processing will be described with reference to the flowchart in Fig. 7.

In step S51, the autonomous action control unit 132 determines whether or not a task to be executed next is autonomously executable. In a case where it is determined that the task to be executed next is autonomously executable, the processing proceeds to step S52.

In step S52, the robot 11 autonomously executes the task.

For example, in a case where the task to be executed next is the interaction task, the autonomous action control unit 132 instructs the interaction module 141a to autonomously execute the task. In response to this, the autonomous interaction unit 161a of the interaction module 141a autonomously executes the instructed task.

For example, in a case where the task to be executed next is the observation task, the autonomous action control unit 132 instructs the observation module 141b to autonomously execute the task. In response to this, the autonomous observation unit 161b of the observation module 141b autonomously executes the instructed task.

For example, in a case where the task to be executed next is the work task, the autonomous action control unit 132 instructs the work module 141c to autonomously execute the task. In response to this, the autonomous work unit 161c of the work module 141c autonomously executes the instructed task.

For example, in a case where the task to be executed next is the movement task, the autonomous action control unit 132 instructs the movement module 141d to autonomously execute the task. In response to this, the autonomous movement unit 161d of the movement module 141d autonomously executes the instructed task.

In step S53, the autonomous action control unit 132 determines whether or not the task has been completed on the basis of information from the task execution module 141 which has been instructed to execute the task. In a case where it is determined that the task has not been completed, the processing proceeds to step S54.

In step S54, the autonomous action control unit 132 determines whether or not the task has failed on the basis of the information from the task execution module 141 which has been instructed to execute the task. In a case where it is determined that the task has not failed, the processing returns to step S52.

Thereafter, the processing of steps S52 to S54 is repeatedly executed until it is determined in step S53 that the task has been completed or it is determined in step S54 that the task has failed.

On the other hand, in a case where it is determined in step S54 that the task has failed, the processing proceeds to step S55.

Here, an example in which it is determined that the task has failed will be described.

For example, in a case where a target time of the task is set, in a case where the task has not been completed within the target time, it is determined that the task has failed.

Note that, in a case of a new task, it is difficult to set the target time, and thus, the target time is set somewhat longer. On the other hand, in a case of a task for which a similar task has been executed in the past, the target time is set on the basis of an actual value of the time taken for the similar task in the past.

For example, in a case of executing a task for recognizing the target person, the surrounding state, and the like, when a certainty factor (recognition accuracy) is low, it is determined that the task has failed.

Note that an allowable range (threshold) of the certainty factor is set, for example, on the basis of a degree to which erroneous recognition is allowable. For example, in a case of a task for which erroneous recognition is not allowed, such as face authentication, the threshold is set to a high value (for example, 99% or more). On the other hand, in a case of a task for which erroneous recognition is allowed to some extent, such as conversation content recognition, the threshold is set to a somewhat low value (for example, 70% or more).

Note that the threshold of the certainty factor is learned and optimized every time a similar task is executed.

For example, in a case where the robot 11 has an unexpected collision or contact with the surrounding environment during the execution of the movement task, it is determined that the task has failed. The unexpected collision or contact with the surrounding environment is detected by, for example, a detection value of a sensor such as a tactile sensor or a force sensor, a current value of an actuator, sound recognition of a contact sound, an input value of a switch, or the like.

For example, in a case of executing the work task, in a case where a work error occurs, it is determined that the task has failed. For example, in a case where an abnormality of a target object being a target of the work occurs, it is determined that the task has failed. The abnormality of the target object is, for example, falling, collapse, collision, or the like of the target object. The abnormality of the target object is detected by, for example, image recognition, sound recognition of a contact sound, a detection value of a sensor such as a tactile sensor or a force sensor, or the like.

On the other hand, in a case where it is determined in step S51 that the task to be executed next is not autonomously executable, the processing of steps S52 to S54 is skipped, and the processing proceeds to step S55.

In step S55, the remote action control unit 133 requests the remote operation for the task. Specifically, the remote action control unit 133 generates the task request information including information regarding the task for which the remote operation is requested, and transmits the task request information to the server 13 via the communication unit 104 and the network 21.

In response to this, the server 13 performs matching of the requested task with the remote operator as described later.

In step S56, the robot 11 executes the task by remote operation.

For example, in a case where the task to be a remote operation target is the interaction task, the remote action control unit 113 instructs the interaction module 141a to execute the task by remote operation. In response to this, the remote interaction unit 162a of the interaction module 141a executes the instructed task in accordance with the remote operation.

For example, in a case where the task to be the remote operation target is the observation task, the remote action control unit 113 instructs the observation module 141b to execute the task by remote operation. In response to this, the remote observation unit 162b of the observation module 141b executes the instructed task in accordance with the remote operation.

For example, in a case where the task to be the remote operation target is the work task, the remote action control unit 113 instructs the work module 141c to execute the task by remote operation. In response to this, the remote work unit 162c of the work module 141c executes the instructed task in accordance with the remote operation.

For example, in a case where the task to be the remote operation target is the movement task, the remote action control unit 113 instructs the movement module 141d to execute the task by remote operation. In response to this, the remote movement unit 162d of the movement module 141d executes the instructed task in accordance with the remote operation.

At this time, the remote task execution unit 162 that executes the task by remote operation (hereinafter, referred to as a target remote task execution unit 162) transmits information necessary for the remote operation (remote operation provision information) to the server 13 via the communication unit 104 and the network 21 as appropriate. Furthermore, the target remote task execution unit 162 receives the remote operation content information indicating the content of the remote operation from the server 13 via the network 21 and the communication unit 104. The target remote task execution unit 162 executes the task on the basis of the remote operation content information.

In step S57, it is determined whether or not the task has been completed, similarly to the processing of step S53. In a case where it is determined that the task has not been completed, the processing proceeds to step S58.

In step S58, similarly to the processing of step S54, it is determined whether or not the task has failed. In a case where it is determined that the task has not failed, the processing returns to step S56.

Thereafter, the processing of steps S56 to S58 is repeatedly executed until it is determined in step S57 that the task has been completed or it is determined in step S58 that the task has failed.

On the other hand, in a case where it is determined in step S58 that the task has failed, the processing proceeds to step S59.

In step S59, the robot 11 notifies the server 13 of the failure of the task. Specifically, the remote action control unit 133 generates the task failure notification signal for notifying of the failure of the task, and transmits the task failure notification signal to the server 13 via the communication unit 104 and the network 21.

In step S60, the remote action control unit 133 determines whether or not to execute the task again. In a case where it is determined to execute the task again, the processing returns to step S55.

Thereafter, the processing of steps S55 to S60 is repeatedly executed until it is determined in step S57 that the task has been completed or it is determined in step S60 not to execute the task again. That is, the execution processing by remote operation for the failed task is repeatedly executed.

On the other hand, in a case where it is determined in step S60 not to execute the task again, the task execution control processing ends. This means that, for example, a case where the task fails a predetermined number of times or more or the task is not completed within a predetermined time is assumed.

On the other hand, in a case where it is determined in step S57 that the task has been completed, the processing proceeds to step S61.

In step S61, the robot 11 notifies the server 13 of the completion of the task. Specifically, the remote action control unit 133 generates a task success notification signal for notifying of the completion of the task, and transmits the task success notification signal to the server 13 via the communication unit 104 and the network 21.

In step S62, the robot 11 executes learning processing on the basis of the content of the remote operation. For example, the learning unit 152 of the task execution module 141 that has executed the task by remote operation learns a method of autonomously executing the task on the basis of the content of the remote operation.

With this arrangement, in the future, it is expected that the non-autonomous task gradually shifts to the autonomous task and is autonomously executed by the robot 11.

Thereafter, the task execution control processing ends.

Returning to Fig. 6, in step S3, the action planning unit 121 determines whether or not it is necessary to change the action plan. In a case where it is determined that it is not necessary to change the action plan, the processing proceeds to step S4.

In step S4, the action planning unit 121 determines whether or not the action during execution has been completed on the basis of the result of the processing of step S2. In a case where it is determined that the action during execution has not been completed, the processing returns to step S2.

Thereafter, the processing of steps S2 to S4 is repeatedly executed until it is determined in step S2 that it is necessary to change the action plan or it is determined in step S4 that the action during execution has been completed.

On the other hand, in a case where it is determined in step S4 that the action during execution has been completed, the processing proceeds to step S6.

On the other hand, in a case where it is determined in step S3 that it is necessary to change the action plan, the processing proceeds to step S5. This means that, for example, a case where it is difficult to execute the action as planned due to a task failure, an unexpected situation, an occurrence of disturbance, or the like is assumed.

In step S5, the action planning unit 121 changes the action plan. For example, the action planning unit 121 reviews the action plan and changes a plan of a series of actions necessary for achieving the given purpose. Furthermore, the action planning unit 121 decomposes each action after the change into a plurality of tasks.

Note that, at this time, in a case where it is determined that it is difficult to achieve the given purpose, the action planning unit 121 may determine to stop the action.

Thereafter, the processing proceeds to step S6.

In step S6, the action planning unit 121 determines whether or not there is an action to be executed next. In a case where it is determined that there is an action to be executed next, the processing returns to step S2.

Thereafter, in step S6, the processing of steps S2 to S6 is repeatedly executed until it is determined that there is no action to be executed next. With this arrangement, the action is executed in accordance with the action plan.

On the other hand, in a case where it is determined in step S6 that there is no action to be executed next, the processing in the robot 11 ends.

### <Processing in server 13>

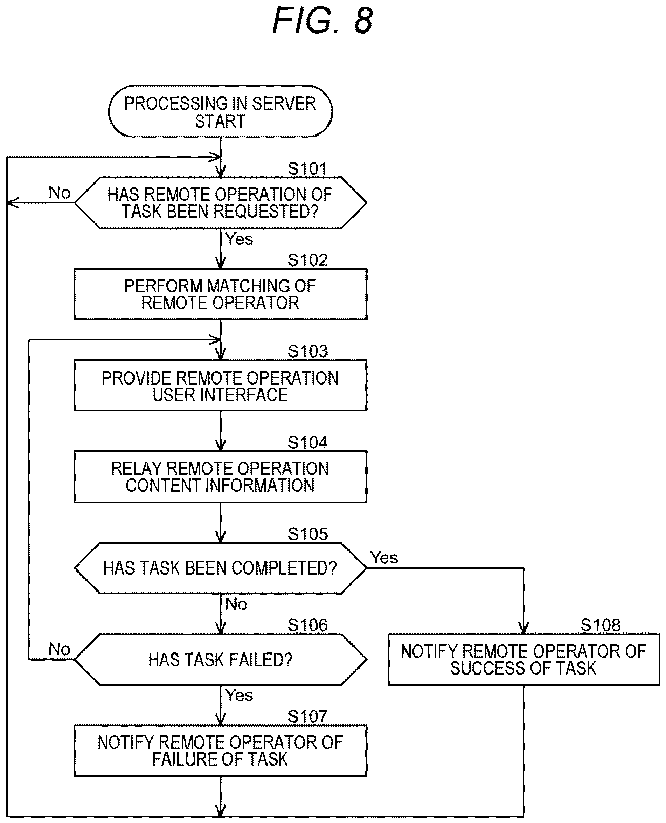

Next, processing executed by the server 13 correspondingly to the processing in robot 11 in Fig. 6 will be described with reference to a flowchart in Fig. 8.

In step S101, the remote control unit 311 determines whether or not the remote operation for a task has been requested. The determination processing of step S101 is repeatedly executed until it is determined that the remote operation for a task has been requested. Then, in a case where the remote control unit 311 receives the task request information transmitted from the robot 11 in the processing of step S55 in Fig. 7 via the network 21 and the communication unit 301, it is determined that the remote operation for a task has been requested, and the processing proceeds to step S102.

In step S102, the matching unit 312 performs matching of the remote operator. That is, the matching unit 312 determines a remote operator in charge of the requested task by executing matching processing.

Here, a method of the matching processing is not particularly limited.

For example, the matching unit 312 selects one remote operator who can be in charge of remote operation at the present time point from among the remote operators having skills with which the requested task can be executed on the basis of the remote operator database stored in the storage unit 303.

Alternatively, for example, the matching unit 312 calls for remote operators having skills that enables execution of the requested task, and selects one operator from the remote operators who have applied.

Note that, for example, in a case where a plurality of remote operators is needed, the matching unit 312 selects the number of remote operators as many as needed.

The matching unit 312 transmits the task request information to the operation terminal 12 of the selected remote operator via the communication unit 301 and the network 21.

In step S103, the server 13 provides the remote operation user interface. For example, the remote control unit 311 receives the remote operation provision information from the robot 11 via the network 21 and the communication unit 301. The remote control unit 311 generates the remote operation UI information for providing the remote operation UI on the basis of the remote operation provision information. The remote control unit 311 transmits the remote operation provision information to the operation terminal 12 of the remote operator via the communication unit 301 and the network 21.

In response to this, the operation terminal 12 presents the remote operation UI to the remote operator on the basis of the remote operation UI information.

Here, it is desirable that the remote operation UI is a UI with which the operators around the world having different skills are highly motivated and can simply perform the remote operation efficiently.

For example, the remote operation UI may include a video obtained by imaging an environment in which the robot 11 actually executes the task.

Alternatively, for example, the remote operation UI may include a video of a virtual space simulating, by using computer graphics (CG) or the like, an environment in which the robot 11 executes the task.

In this case, for example, the remote operation UI may be provided in the virtual space (metaverse space) in which the remote operator exists as an avatar or a character and is active.

With this arrangement, the actual environment around the robot 11 is concealed and the privacy of the user of the robot 11 is protected. Furthermore, information of the real world can be changed in such a way as to facilitate execution of the remote operation.

Alternatively, for example, the remote operation UI may include a dedicated video for executing the task, for example, a game video for executing the task, the video being irrelevant to the environment in which the robot 11 executes the task.

In this case, for example, the remote operation UI may be provided in an abstract game space or the above-described virtual space. Furthermore, for example, in a game, an additional value such as leveling up, reward/item acquisition, point accumulation, and storyline progression may be given to a remote operator who is a player of the game according to a skill level, an operation success rate, the number of processed operations, an operation processing speed, and the like. Furthermore, the acquired points may be exchanged for money in the virtual world or the real world.

With this arrangement, the actual environment around the robot 11 is concealed and the privacy of the user of the robot 11 is protected. Furthermore, for example, operability and enjoyability of game are enhanced, and improvement is expected in motivation and work efficiency of the remote operator. Moreover, for example, the player of the game can perform the remote operation of the robot 11 as business to earn income, so that a new employment style can be provided.

In step S104, the server 13 relays the remote operation content information.

For example, the remote operator performs the remote operation for the requested task in accordance with the remote operation UI presented by the operation terminal 12. The operation terminal 12 generates the remote operation content information indicating the content of the remote operation, and transmits the remote operation content information to the server 13 via the network 21.

In response to this, the remote control unit 311 of the server 13 receives the remote operation content information via the network 21 and the communication unit 301.

The remote control unit 311 converts the remote operation content information into one adapted for the robot 11 as necessary. For example, depending on the content of the remote operation UI, the operation content performed by the remote operator needs to be converted into information for actually remotely operating the robot 11 (for example, an operation signal). In response to this, the remote control unit 311 converts the remote operation content information into one adapted for the robot 11.

The remote control unit 311 transmits the remote operation content information to the robot 11 to be the remote operation target via the communication unit 301 and the network 21.

In step S105, the remote control unit 311 determines whether or not the task has been completed. In a case where it is determined that the task has not been completed, the processing proceeds to step S106.

In step S106, the remote control unit 311 determines whether or not the task has failed. In a case where it is determined that the task has not failed, the processing returns to step S103.

Thereafter, the processing of steps S103 to S106 is repeatedly executed until it is determined in step S105 that the task has been completed or it is determined in step S106 that the task has failed.

On the other hand, in step S106, in a case where the remote control unit 311 receives the task failure notification signal transmitted from the robot 11 in the processing of step S59 in Fig. 7 via the network 21 and the communication unit 301, it is determined that the task has failed, and the processing proceeds to step S107.

In step S107, the remote control unit 311 notifies the remote operator of the failure of the task. Specifically, the remote control unit 311 transmits the task failure notification signal to the operation terminal 12 of the remote operator via the communication unit 301 and the network 21.

Note that, at this time, the remote control unit 311 updates, as necessary, information regarding the remote operator (for example, the skill level, the remote operation history, and the like) who has failed in the remote operation in the remote operator database stored in the storage unit 303. Furthermore, the remote control unit 311 updates, as necessary, information regarding the task for which the remote operation has failed (for example, the content, the difficulty level, and the like) in the task database stored in the storage unit 303.

Thereafter, the processing returns to step S101, and the processing of step S101 and subsequent steps is performed.

On the other hand, in step S106, in a case where the remote control unit 311 receives the task failure notification signal transmitted from the robot 11 in the processing of step S59 in Fig. 7 via the network 21 and the communication unit 301, it is determined that the task has failed, and the processing proceeds to step S107.

On the other hand, in step S105, in a case where the remote control unit 311 receives the task completion notification signal transmitted from the robot 11 in the processing of step S61 in Fig. 7 via the network 21 and the communication unit 301, it is determined that the task has been completed, and the processing proceeds to step S108.

In step S108, the remote control unit 311 notifies the remote operator of the completion of the task. Specifically, the remote control unit 311 transmits the task completion notification signal to the operation terminal 12 of the remote operator via the communication unit 301 and the network 21.

Note that, at this time, the remote control unit 311 updates, as necessary, information regarding the remote operator (for example, the skill level, the remote operation history, and the like) who has succeeded in the remote operation in the remote operator database stored in the storage unit 303. Furthermore, the remote control unit 311 updates, as necessary, information regarding the task for which the remote operation has succeeded (for example, the content, the difficulty level, and the like) in the task database stored in the storage unit 303.

Thereafter, the processing returns to step S101, and the processing of step S101 and subsequent steps is performed.

### <Specific example of task execution processing in robot 11>

Next, a specific example of task execution processing in the robot 11 will be described.

### <Example of executing action of pouring tea into cup and transporting cup>

First, an example in which the robot 11 executes an action of pouring tea into a cup and transporting the cup will be described.

For example, the state recognition unit 131 detects a user speaking near the robot 11.

The autonomous action control unit 132 instructs the interaction module 141a to execute a task of executing an interaction with the user.

The autonomous interaction unit 161a executes the interaction with the user and recognizes a word "I want something to drink" in the speech of the user.

However, because the certainty factor of speech recognition of the autonomous interaction unit 161a is low, the remote action control unit 133 requests the server 13 to perform the remote operation for the task.

The server 13 requests the movement operator selected by executing the matching processing to perform the remote operation for the task.

The remote interaction unit 162a executes the interaction with the user by remote operation of the interaction operator. With this arrangement, the remote interaction unit 162a recognizes that the user "wants to drink tea" with a high certainty factor.

In response to this, the action planning unit 121 plans an action of "transporting a cup containing tea to the user".

Next, the autonomous action control unit 132 instructs the movement module 141d to execute a task of moving to the front of a shelf on which a cup is placed.

The autonomous movement unit 161d moves the robot 11 to a position 1 m in front of the shelf.

Next, the autonomous action control unit 132 instructs the observation module 141b to execute a task of searching for the cup from inside the shelf.

The shelf has no door, and tableware inside the shelf can be seen. The autonomous observation unit 161b searches for the cup in the shelf. However, more objects than usual are stored in the shelf, and the certainty factor of recognizing the cup by the autonomous observation unit 161b is low.

In response to this, the remote action control unit 133 requests the server 13 to perform the remote operation for the task.

The server 13 requests the observation operator selected by executing the matching processing to perform the remote operation for the task.

The remote observation unit 162b finds the cup by remote operation of the observation operator.

Next, the autonomous action control unit 132 instructs the movement module 141d to execute a task of moving the robot 11 to a position 50 cm in front of the cup.

The autonomous movement unit 161d moves the robot 11 to a position 50 cm in front of the cup.

Next, the autonomous action control unit 132 instructs the work module 141c to execute a task of gripping the cup.

The autonomous work unit 161c attempts to grip the cup but finds difficulty in gripping the cup because many other objects are placed around the cup. Therefore, while the autonomous work unit 161c is searching for an optimal approach to the cup, the work time has exceeded an instructed work time.

In response to this, the remote action control unit 133 requests the server 13 to perform the remote operation for the task.

The server 13 requests the work operator selected by executing the matching processing to perform the remote operation for the task.

The remote work unit 162c makes the robot 11 grip the cup by remote operation of the remote worker.

Next, the autonomous action control unit 132 instructs the movement module 141d to execute a task of moving to the front of a tea feeder.

The autonomous movement unit 161d moves the robot 11 to the front of the tea feeder.

Next, the autonomous action control unit 132 instructs the work module 141c to execute a task of setting the cup in the tea feeder.

The autonomous work unit 161c sets the cup in the tea feeder.

Next, the autonomous action control unit 132 instructs the work module 141c to execute a task of operating a tea feeing switch of the tea feeder.

The autonomous work unit 161c performs an operation of the tea feeding switch of the tea feeder. With this arrangement, the tea is poured into the cup by the tea feeder.

The autonomous action control unit 132 instructs the work module 141c to execute a task of gripping the cup containing tea.

The autonomous work unit 161c starts to grip the cup.

However, while the autonomous work unit 161c is gripping the cup, the autonomous interaction unit 161a detects a staff member who is a third person in a kitchen speaking to the robot 11. The autonomous interaction unit 161a recognizes that the content of the speech of the staff member is "Can you step aside for a moment?" by speech recognition.

In response to this, the action planning unit 121 determines that moving to a place that does not interfere with the staff member is given more priority than gripping the cup. The autonomous action control unit 132 instructs the work module 141c to stop the task of gripping the cup.

The autonomous work unit 161c stops the gripping of the cup and returns the arm of the robot 11 which is about to hold the cup to the original standard posture.

The autonomous action control unit 132 instructs the movement module 141d to execute a task of moving to a place 1 m away from the front of the tea feeder in the opposite direction from where the staff member is.

The autonomous movement unit 161d attempts to move from the front of the tea feeder. However, because a passage width is narrow and there are many obstacles including a person around the robot 11, a movement route plan of the autonomous movement unit 161d fails, and the robot 11 cannot move.

In response to this, the remote action control unit 133 requests the server 13 to perform the remote operation for the task.

The server 13 requests the movement operator selected by executing the matching processing to perform the remote operation for the task.

The remote movement unit 162d moves the robot 11 from the front of the tea feeder by remote operation of the movement operator.

Next, the autonomous action control unit 132 instructs the observation module 141b to execute a task of confirming a state of the obstacles including a person in front of the tea feeder in order to determine whether or not the robot can return to the original task (gripping of the cup).

The autonomous observation unit 161b confirms that there is no obstacle including a person in front of the tea feeder. However, because there are many objects around the tea feeder, the certainty factor of the autonomous observation unit 161b is low.

In response to this, the remote action control unit 133 requests the server 13 to perform the remote operation for the task.

The server 13 requests the observation operator selected by executing the matching processing to perform the remote operation for the task.

The remote observation unit 162b confirms that there is no obstacle in front of the tea feeder by remote operation of the observation operator.

Next, the autonomous action control unit 132 instructs the movement module 141d to execute a task of moving to the front of the tea feeder.

The autonomous movement unit 161d moves the robot 11 to the front of the tea feeder.

Next, the autonomous action control unit 132 instructs the work module 141c to execute a task of gripping the cup set in the tea feeder.

The autonomous work unit 161c makes the robot 11 grip the cup.

Next, the autonomous action control unit 132 instructs the movement module 141d to execute a task of moving to the front of a desk where the user is present.

The autonomous movement unit 161d moves the robot 11 to the front of the desk where the user is present.

Next, the autonomous action control unit 132 instructs the observation module 141b to execute a task of finding the user and confirming the state.

The autonomous observation unit 161b detects the position and orientation of the face of the user. However, because the user is slightly facing down and there are many shadows on the face of the user, the certainty factor of the autonomous observation unit 161b is low.

In response to this, the autonomous action control unit 132 requests the server 13 to perform the remote operation for the task.

The server 13 requests the observation operator selected by executing the matching processing to perform the remote operation for the task.

The remote observation unit 162b finds the user by remote operation of the observation operator and confirms that there is no abnormality in the user.

Next, the autonomous action control unit 132 instructs the interaction module 141a to execute a task of starting conversation with the user, such as "I've got some tea for you" or "I'll put the cup here".

The autonomous interaction unit 161a starts conversation with the user. In response to this, although there is a response from the user, because the user is slightly facing down, the pronunciation is unclear, and there is a lot of environmental noise, it may be difficult for the autonomous interaction unit 161a to recognize the response from the user.

In response to this, the remote action control unit 133 requests the server 13 to perform the remote operation for the task.

The server 13 requests the interaction operator selected by executing the matching processing to perform the remote operation for the task.

The remote interaction unit 162a starts conversation with the user by remote operation of the interaction operator. Then, the remote interaction unit 162a (remote operator) confirms that the user is positive with a high certainty factor.

Next, the autonomous action control unit 132 instructs the work module 141c to execute a task of placing the cup on the desk.

The autonomous work unit 161c places the cup on the desk.

Next, the autonomous action control unit 132 instructs the interaction module 141a to execute a task of interacting with the user.

The autonomous interaction unit 161a executes an interaction with the user.

Then, the action planning unit 121 confirms completion of the action of "transporting the cup containing tea to the user".

By combining the autonomous operation and the remote operation as described above, the robot 11 can pour tea into the cup and transport the cup to the user while interacting with the user.

### <Example of executing action of measuring vital value of nursing care target person>

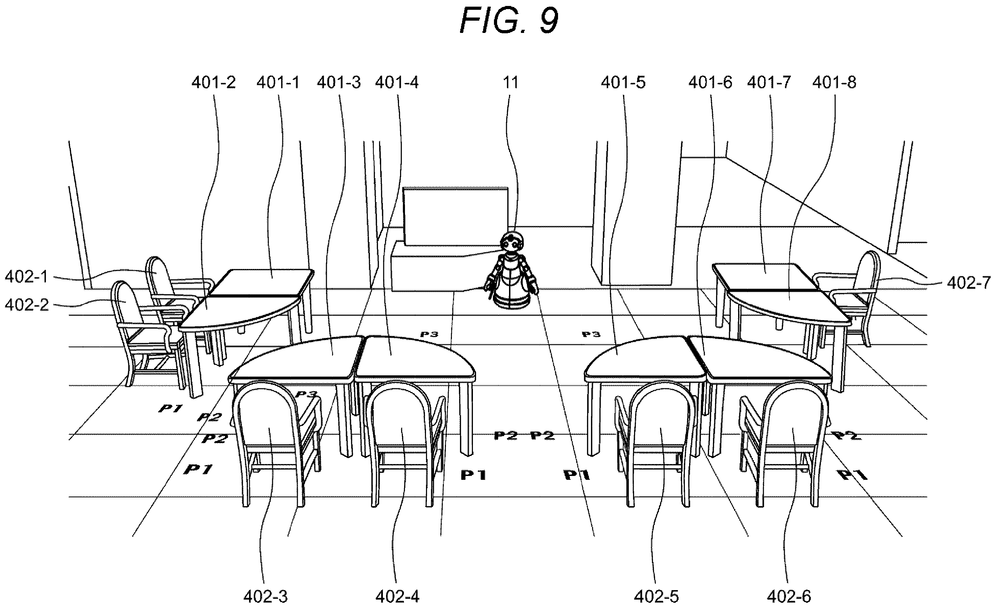

Next, an example in which the robot 11 in Fig. 4 executes an action of measuring a vital value of a nursing care target person 403 will be described with reference to Figs. 9 to 12.

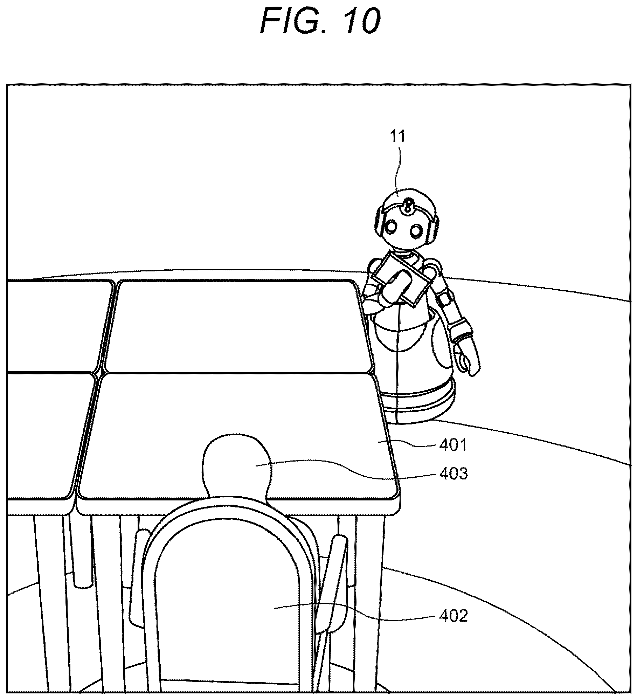

Note that, hereinafter, an example of a case where the robot 11 executes a vital measurement application for measuring the vital value of the target person 403 (Fig. 10) in a living room illustrated in Fig. 9 will be described.

In Fig. 9, a position where the robot 11 is present is a home position P0, and for example, a charging dock (not illustrated) is disposed at the position. Furthermore, tables 401-1 to 401-8 and chairs 402-1 to 402-7 are disposed in the living room.

The tables 401-1 to 401-8 are arranged in a U shape. That is, a row of the tables 401-1 and 401-2, a row of the tables 401-3 to 401-6, and a row of the tables 401-7 and 401-8 are arranged in a U shape. The row of the tables 401-3 to 401-6 is arranged in front of the robot 11. The row of the tables 401-1 and 401-2 and the row of the tables 401-7 and 401-8 are arranged in a direction perpendicular to the row of the tables 401-3 to 401-6 and face each other.

Furthermore, the chairs 402-1 to 402-7 are each disposed for corresponding one of the tables 401-1 to 401-7. Note that no chair is disposed for the table 401-8.

Note that, hereinafter, in a case where it is not necessary to individually distinguish the tables 401-1 to 401-7, the table is simply referred to as the table 401. Hereinafter, in a case where it is not necessary to individually distinguish the chairs 402-1 to 402-7, the chair is simply referred to as the chair 402.

Furthermore, in Fig. 9, a long-distance position P3, a middle-distance position P2, and a short-distance position P1 with respect to each chair 402 are illustrated.

For example, the long-distance position P3 is set to a position about 2 m away from the target person 403 in a direction of about 0 degrees with respect to the front of the target person 403 who is a target for the robot 11 to execute the application.

For example, the middle-distance position P2 is set to a position about 1.2 m away from the target person 403 in a direction of about 45 degrees with respect to the front of the target person 403.

For example, the short-distance position P1 is set to a position about 0.6 m away from the target person 403 in a direction of about 70 degrees with respect to the front of the target person 403.

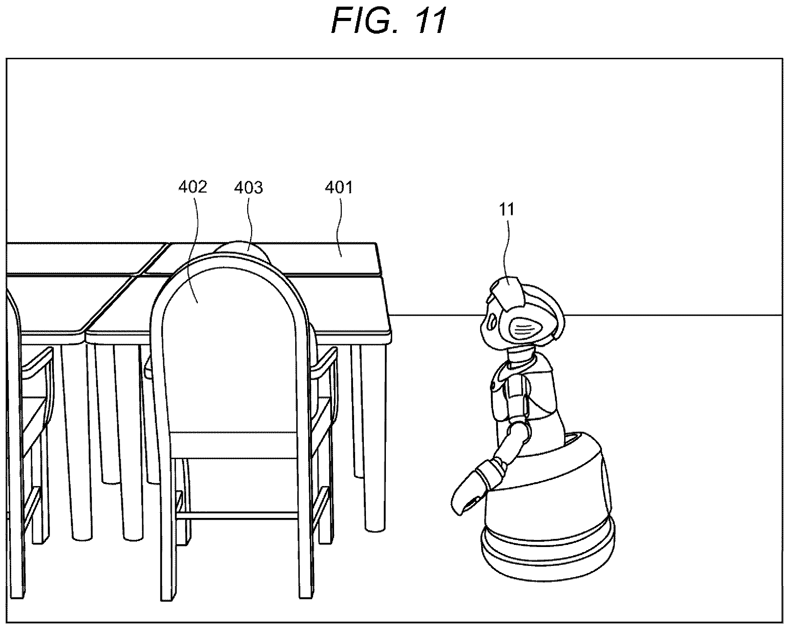

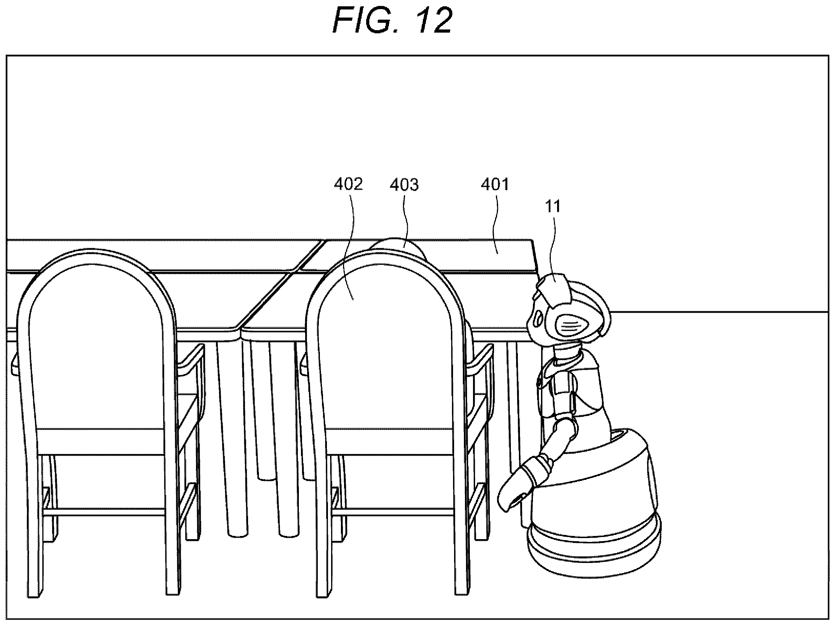

For example, the action planning unit 121 plans an action of starting conversation with the target person 403 at each position while approaching the target person 403 in the order of the long-distance position P3 (Fig. 10), the middle-distance position P2 (Fig. 11), and the short-distance position P1 (Fig. 12), and finally measuring the vital value of the target person 403 at the short-distance position P1.

Next, the autonomous action control unit 132 instructs the movement module 141d to execute a task of moving to the long-distance position P3.

The autonomous movement unit 161d moves the robot 11 to the long-distance position P3.

Here, for example, in a case where the robot 11 cannot move to the long-distance position P3 within a target time, the remote action control unit 133 requests the server 13 to perform the remote operation for the task.

The server 13 requests the movement operator selected by executing the matching processing to perform the remote operation for the task.

The remote movement unit 162d moves the robot 11 to the long-distance position P3 by remote operation of the movement operator. Here, because the movement operator is superior in situation recognition and determination to the robot 11, a task success rate increases. This similarly applies to the following movement task.

Next, the autonomous action control unit 132 requests the interaction module 141a to execute a task of interacting with the target person 403.

The autonomous interaction unit 161a executes an interaction with the target person 403.

Here, for example, in a case where a failure of the interaction with the target person 403 is detected, the remote action control unit 133 requests the server 13 to perform the remote operation for the task.

The server 13 requests the interaction operator selected by executing the matching processing to perform the remote operation for the task.

The remote interaction unit 162a executes an interaction with the target person 403 by remote operation of the interaction operator. Here, because the interaction operator is superior in situation recognition and determination to the robot 11, the task success rate increases. This similarly applies to the following interaction task.

Next, the autonomous action control unit 132 instructs the movement module 141d to execute a task of moving to the middle-distance position P2.

The autonomous movement unit 161d moves the robot 11 to the middle-distance position P2.

Here, for example, in a case where the robot 11 cannot move to the middle-distance position P2 within a target time, the remote action control unit 133 requests the server 13 to perform the remote operation for the task.

The server 13 requests the movement operator selected by executing the matching processing to perform the remote operation for the task. At this time, the server 13 may preferentially request the previously requested movement operator for the remote operation.

The remote movement unit 162d moves the robot 11 to the middle-distance position P2 by remote operation of the movement operator.

Next, the autonomous action control unit 132 requests the interaction module 141a to execute a task of interacting with the target person 403.

The autonomous interaction unit 161a executes an interaction with the target person 403.

Here, for example, in a case where a failure of the interaction with the target person 403 is detected, the remote action control unit 133 requests the server 13 to perform the remote operation for the task.

The server 13 requests the interaction operator selected by executing the matching processing to perform the remote operation for the task. At this time, the server 13 may preferentially request the previously requested interaction operator for the remote operation.

The remote interaction unit 162a executes an interaction with the target person 403 by remote operation of the interaction operator.

Next, the autonomous action control unit 132 instructs the movement module 141d to execute a task of moving to the short-distance position P1.

The autonomous movement unit 161d moves the robot 11 to the short-distance position P1.

Here, for example, in a case where the robot 11 cannot move to the short-distance position P1 within a target time, the remote action control unit 133 requests the server 13 to perform the remote operation for the task.

The server 13 requests the movement operator selected by executing the matching processing to perform the remote operation for the task. At this time, the server 13 may preferentially request the previously requested movement operator for the remote operation.

The remote movement unit 162d moves the robot 11 to the short-distance position P1 by remote operation of the movement operator.

Next, the autonomous action control unit 132 requests the interaction module 141a to execute a task of interacting with the target person 403.

The autonomous interaction unit 161a executes an interaction with the target person 403.

Here, for example, in a case where a failure of the interaction with the target person 403 is detected, the remote action control unit 133 requests the server 13 to perform the remote operation for the task.

The server 13 requests the interaction operator selected by executing the matching processing to perform the remote operation for the task. At this time, the server 13 may preferentially request the previously requested interaction operator for the remote operation.

The remote interaction unit 162a executes an interaction with the target person 403 by remote operation of the interaction operator.

Next, the autonomous action control unit 132 instructs the observation module 141b to execute a task of recognizing the positions of the face and the hand of the target person 403.

The autonomous observation unit 161b attempts to recognize the positions of the face and the hand of the target person 403.

Here, for example, in a case where the recognition of the positions of the face and the hand of the target person 403 has failed, the remote action control unit 133 requests the server 13 to perform the remote operation for the task.

The server 13 requests the observation operator selected by executing the matching processing to perform the remote operation for the task.

The remote observation unit 162b recognizes the positions of the face and the hand of the target person 403 by remote operation of the observation operator. Here, because the observation operator is superior in situation recognition and determination to the robot 11, the task success rate increases. This similarly applies to the following observation task.

Next, the autonomous action control unit 132 instructs the work module 141c to execute a task of holding out the hand 233 of the robot 11 toward the front of the target person 403.

The autonomous work unit 161c attempts to hold out the hand 233 of the robot 11 toward the front of the target person 403.

Here, for example, in a case where the robot 11 cannot hold out the hand 233 toward the front of the target person 403, the remote action control unit 133 requests the server 13 to perform the remote operation for the task.

The server 13 requests the work operator selected by executing the matching processing to perform the remote operation for the task.

The remote observation unit 162b makes the robot 11 hold out the hand 233 toward the front of the target person 403 by remote operation of the work operator.

At this time, for example, even if an unexpected situation where an obstacle is present on the table 401 occurs, a space for holding out the hand 233 can be easily secured by the work operator finding and moving the obstacle. In contrast, it is difficult for the robot 11 to autonomously move the obstacle and to hold out the hand 233 of the robot 11 toward the front of the target person 403.

Next, for example, the autonomous interaction unit 161a detects an unexpected situation where a staff member who is a third party speaks to the robot 11. The autonomous interaction unit 161a attempts to recognize the content of the speech of the staff member.

Here, for example, in a case where the autonomous interaction unit 161a cannot recognize the content of the speech of the staff member, the remote action control unit 133 requests the server 13 to perform the remote operation for a task of recognizing the content of the speech of the staff member.

The server 13 requests the interaction operator selected by executing the matching processing to perform the remote operation for the task.

The remote interaction unit 162a interacts with the staff member by remote operation of the interaction operator, and recognizes that the content of the speech of the staff member is "Can you step aside for a moment?".

At this time, for example, even if an unexpected situation where the staff member speaks to the robot occurs, the interaction operator can easily recognize the content of the speech of the staff member.

Next, the action planning unit 121 determines that a priority of a task of moving to allow the staff member to pass is high. In response to this, the autonomous action control unit 132 instructs the movement module 141d to execute the task of moving to allow the staff member to pass.

The autonomous movement unit 161d attempts to move the robot 11 to allow the staff member to pass.

Here, for example, in a case where the robot 11 cannot move to allow the staff member to pass within a target time, the remote action control unit 133 requests the server 13 to perform the remote operation for the task.

The server 13 requests the movement operator selected by executing the matching processing to perform the remote operation for the task. At this time, the server 13 may preferentially request the previously requested movement operator for the remote operation.

The remote movement unit 162d moves the robot 11 to allow the staff member to pass by remote operation of the movement operator.

At this time, for example, even if an unexpected situation where the robot is to move to an unplanned position occurs, the movement operator can easily move the robot 11.

Next, the autonomous action control unit 132 instructs the observation module 141b to execute a task of confirming the passage of the staff member.

The autonomous observation unit 161b attempts to confirm the passage of the staff member.

Here, for example, in a case where the confirmation of the passage of the staff member has failed, the remote action control unit 133 requests the server 13 to perform the remote operation for the task.

The server 13 requests the observation operator selected by executing the matching processing to perform the remote operation for the task. At this time, the server 13 may preferentially request the previously requested observation operator for the remote operation.

The remote observation unit 162b confirms the passage of the staff member by remote operation of the observation operator.

At this time, for example, even if an unexpected situation where the passage of the staff member is to be confirmed occurs, the observation operator can easily confirm the passage of the staff member.

Thereafter, the tasks from the task of moving to the short-distance position P1 to the task of holding out the hand 233 of the robot 11 toward the front of the target person 403 are executed again.

Next, the autonomous action control unit 132 instructs the interaction module 141a to execute a task of requesting the target person 403 to touch the hand 233 of the robot 11.

The autonomous interaction unit 161a requests the target person 403 to touch the hand 233 of the robot 11.

Here, for example, in a case where a failure of the interaction with the target person 403 is detected, the remote action control unit 133 requests the server 13 to perform the remote operation for the task.

The server 13 requests the interaction operator selected by executing the matching processing to perform the remote operation for the task. At this time, the server 13 may preferentially request the previously requested interaction operator for the remote operation.

The remote interaction unit 162a requests the target person 403 to touch the hand 233 of the robot 11 by remote operation of the interaction operator.

Next, the autonomous action control unit 132 instructs the observation module 141b to execute a task of confirming that the hand of the target person 403 is in contact with the hand 233 of the robot 11.

The autonomous observation unit 161b confirms that the hand of the target person 403 is in contact with the hand 233 of the robot 11.

Here, for example, in a case where the confirmation of the hand of the target person 403 being in contact with the hand 233 of the robot 11 has failed, the remote action control unit 133 requests the server 13 to perform the remote operation for the task.

The server 13 requests the observation operator selected by executing the matching processing to perform the remote operation for the task. At this time, the server 13 may preferentially request the previously requested observation operator for the remote operation.

The remote observation unit 162b confirms that the hand of the target person 403 is in contact with the hand 233 of the robot 11 by remote operation of the observation operator.

Here, for example, it is assumed that the remote operations for the task of holding out the hand 233 of the robot 11 toward the front of the target person 403, the task of requesting the target person 403 to touch the hand 233 of the robot 11, and the task of confirming that the hand of the target person 403 is in contact with the hand 233 of the robot 11 are more efficient and have a higher success rate by being executed in parallel than by being executed sequentially.

In this case, for example, the autonomous action control unit 132 may request the work operator, the interaction operator, and the observation operator for the remote operations in parallel via the server 13. Then, the work operator, the interaction operator, and the observation operator may perform the remote operations in parallel.

In this case, because the work module 141c to be a target of the remote operation of the work operator, the interaction module 141a to be a target of the remote operation of the interaction operator, and the observation module 141b to be a target of the remote operation of the observation operator can independently execute the task, parallel processing of each of the tasks by remote operation is smoothly executed.

Note that, in this case, the work operator, the interaction operator, and the observation operator are not necessarily separate operators, and for example, one operator having a plurality of skills may also serve as two or more operators.

Next, the autonomous action control unit 132 instructs the observation module 141b to execute a task of measuring the vital value of the target person 403.

The remote observation unit 162b measures the vital value of the target person 403.

Next, the autonomous action control unit 132 instructs the interaction module 141a to execute a task of requesting the target person 403 to release the hand from the hand 233 of the robot 11.

The autonomous interaction unit 161a requests the target person 403 to release the hand from the hand 233 of the robot 11.

Here, for example, in a case where a failure of the interaction with the target person 403 is detected, the remote action control unit 133 requests the server 13 to perform the remote operation for the task.

The server 13 requests the interaction operator selected by executing the matching processing to perform the remote operation for the task. At this time, the server 13 may preferentially request the previously requested interaction operator for the remote operation.

The remote interaction unit 162a requests the target person 403 to release the hand from the hand 233 of the robot 11 by remote operation of the interaction operator.

Next, the autonomous action control unit 132 instructs the observation module 141b to execute a task of confirming that the hand of the target person 403 is released from the hand 233 of the robot 11.

The autonomous observation unit 161b confirms that the hand of the target person 403 is released from the hand 233 of the robot 11.

Here, for example, in a case where the confirmation of the release of the hand of the target person 403 from the hand 233 of the robot 11 has failed, the remote action control unit 133 requests the server 13 to perform the remote operation for the task.

The server 13 requests the observation operator selected by executing the matching processing to perform the remote operation for the task. At this time, the server 13 may preferentially request the previously requested observation operator for the remote operation.

The remote observation unit 162b confirms that the hand of the target person 403 is released from the hand 233 of the robot 11 by remote operation of the observation operator.

Next, the autonomous action control unit 132 instructs the work module 141c to execute a task of returning the hand 233 of the robot 11 to the original posture.

The autonomous work unit 161c attempts to return the hand 233 of the robot 11 to the original posture.

Here, for example, in a case where the robot 11 cannot return the hand 233 of the robot 11 to the original posture, the remote action control unit 133 requests the server 13 to perform the remote operation for the task.

The server 13 requests the work operator selected by executing the matching processing to perform the remote operation for the task.

The remote observation unit 162b returns the hand 233 of the robot 11 to the original posture by remote operation of the work operator.

Next, the autonomous action control unit 132 requests the interaction module 141a to execute a task of interacting with the target person 403.

The autonomous interaction unit 161a executes an interaction with the target person 403.

Here, for example, in a case where a failure of the interaction with the target person 403 is detected, the remote action control unit 133 requests the server 13 to perform the remote operation for the task.

The server 13 requests the interaction operator selected by executing the matching processing to perform the remote operation for the task. At this time, the server 13 may preferentially request the previously requested interaction operator for the remote operation.

The remote interaction unit 162a executes an interaction with the target person 403 by remote operation of the interaction operator.

Next, the autonomous action control unit 132 instructs the movement module 141d to execute a task of moving to the next target position.

The autonomous movement unit 161d moves the robot 11 to the next target position.

Here, for example, in a case where the robot 11 cannot move to the next target position within a target time, the remote action control unit 133 requests the server 13 to perform the remote operation for the task.

The server 13 requests the movement operator selected by executing the matching processing to perform the remote operation for the task. At this time, the server 13 may preferentially request the previously requested movement operator for the remote operation.

The remote movement unit 162d moves the robot 11 to the next target position by remote operation of the movement operator.

By combining the autonomous operation and the remote operation as described above, the robot 11 can smoothly measure the vital value of the target person 403.

### <Example of executing action of opening and passing door>

Next, an example in which the robot 11 executes an action of opening and passing a door will be described.

For example, the action planning unit 121 plans an action of moving to the front of the door, opening the door, and then passing the door.

Next, the autonomous action control unit 132 instructs the movement module 141d to execute a task of moving to the front of the door.

The autonomous movement unit 161d moves the robot 11 to the front of the door.

Here, for example, in a case where the robot 11 cannot move to the front of the door, the remote action control unit 133 requests the server 13 to perform the remote operation for the task.

The server 13 requests the movement operator selected by executing the matching processing to perform the remote operation for the task.

The remote movement unit 162d moves the robot 11 to the front of the door by remote operation of the movement operator.

Next, the autonomous action control unit 132 instructs the observation module 141b to execute a task of recognizing a door handle.

The autonomous observation unit 161b attempts to recognize the door handle.

Here, for example, in a case where the recognition of the door handle has failed, the remote action control unit 133 requests the server 13 to perform the remote operation for the task.

The server 13 requests the observation operator selected by executing the matching processing to perform the remote operation for the task.

The remote observation unit 162b recognizes the door handle by remote operation of the observation operator.

Next, the action planning unit 121 plans an action of opening the door and moving on the basis of the shapes, positions, and the like of the door and the door handle.

Next, the autonomous action control unit 132 instructs the work module 141c to execute a task of gripping the door handle.

The autonomous work unit 161c attempts to grip the door handle.

Here, for example, in a case where the robot 11 cannot grip the door handle within a target time, the remote action control unit 133 requests the server 13 to perform the remote operation for the task.

The server 13 requests the work operator selected by executing the matching processing to perform the remote operation for the task.

The remote observation unit 162b grips the door handle by remote operation of the work operator. At this time, because the work operator has more excellent recognition ability for the shape and position of the door handle than the robot 11, the task success rate increases.

Next, the autonomous action control unit 132 instructs the work module 141c to execute a task of rotating the door handle.

The autonomous work unit 161c attempts to rotate the door handle.

Here, for example, in a case where the robot 11 cannot rotate the door handle within a target time, the remote action control unit 133 requests the server 13 to perform the remote operation for the task.

The server 13 requests the work operator selected by executing the matching processing to perform the remote operation for the task. At this time, the server 13 may preferentially request the previously requested work operator for the remote operation.

The remote observation unit 162b rotates the door handle by remote operation of the work operator. At this time, because the work operator has more excellent ability to adjust the moving direction, force, and the like in accordance with the type and shape of the door handle than the robot 11, the task success rate increases.

Next, the autonomous action control unit 132 instructs the work module 141c and the movement module 141d to execute a task of pulling and opening the door.

The autonomous work unit 161c and the autonomous movement unit 161d attempt operations of pulling and opening the door while appropriately moving the robot 11.

Here, for example, in a case where the robot 11 cannot pull and open the door within a target time, the remote action control unit 133 requests the server 13 to perform the remote operations for the task.

The server 13 requests the work operator and the movement operator selected by executing the matching processing to perform the remote operations for the task. At this time, the server 13 may preferentially request the previously requested work operator for the remote operation. Furthermore, the server 13 may request one remote operator to perform the remote operations for the task.

The remote work unit 162c and the remote movement unit 162d pull and open the door by remote operations of the work operator and the movement operator. At this time, because the work operator and the movement operator are superior in situation recognition and determination to the robot 11, the task success rate increases.

Next, the autonomous action control unit 132 instructs the work module 141c to execute a task of holding the door.

The autonomous work unit 161c attempts to hold the door with a hand opposite to the hand gripping the door handle.

Here, for example, in a case where the robot 11 cannot hold the door within a target time, the remote action control unit 133 requests the server 13 to perform the remote operation for the task.

The server 13 requests the work operator selected by executing the matching processing to perform the remote operation for the task. At this time, the server 13 may preferentially request the previously requested work operator for the remote operation.

The remote work unit 162c holds the door by remote operation of the work operator.

Next, the autonomous action control unit 132 instructs the work module 141c and the movement module 141d to execute a task of passing the door while holding the door.

The autonomous work unit 161c and the autonomous movement unit 161d attempt operations of passing the door while holding the door.

Here, for example, in a case where the robot 11 cannot pass the door while holding the door within a target time, the remote action control unit 133 requests the server 13 to perform the remote operations for the task.

The server 13 requests the work operator and the movement operator selected by executing the matching processing to perform the remote operations for the task. At this time, the server 13 may preferentially request the previously requested work operator and movement operator for the remote operations. Furthermore, the server 13 may request one remote operator to perform the remote operations for the task.

The remote work unit 162c and the remote movement unit 162d make the robot pass the door while holding the door by remote operations of the work operator and the movement operator. At this time, because the work operator and the movement operator are superior in situation recognition and determination to the robot 11, the task success rate increases.

By combining the autonomous operation and the remote operation as described above, the robot 11 can smoothly open and pass the door.

Note that, in this action, two or more of the work operator, the movement operator, and the observation operator may perform the remote operations in parallel as necessary. With this arrangement, the efficiency of the remote operation for each task improves in some cases. Furthermore, in this case, the work operator, the movement operator, and the observation operator are not necessarily separate operators, and for example, one operator having a plurality of skills may also serve as two or more operators.

### <Effects of present technology>

Hereinafter, effects of the present technology will be described.

For example, reliability and functions of various actions of the robot 11 are improved. That is, by the robot 11 autonomously executing a task that the robot 11 is good at and executing a task that the robot 11 is weak in by remote operation, it is possible to implement the robot 11 having a new architecture that can utilize the brain or sensory organ of the remote operator as a component. With this arrangement, the reliability of various actions of the robot 11 can be enhanced to a human level or higher. Furthermore, the robot 11 can stably perform multiple tasks demanding hospitality.

For example, because each action of the robot 11 is divided into a plurality of micro-level tasks before the remote operation is requested, work efficiency of the remote operator is improved. That is, because each task is simplified to a level irrelevant to the context, the remote operation becomes easy and simple, and a time taken for the remote operation is also shortened. Therefore, for example, each remote operator can perform the remote operations of the plurality of robots 11 in parallel. Furthermore, for example, each remote operator can participate in the remote operation of the robot 11 while performing other work or job, or can participate in the remote operation of the robot 11 in a short extra time.

For example, because the robot 11 is modularized by each of skills, the remote operations related to the skills can be performed in parallel. This enables the plurality of remote operators to remotely operate one robot 11 in parallel.

For example, the number of skills required for the remote operator is reduced, and thus, more remote operators can perform the remote operation. For example, because each task is simple, a user interface with good operability can be implemented. Therefore, for example, a disabled person can also easily perform the remote operation. With this arrangement, as described above with reference to Fig. 1, many people around the world can participate in and play an active role in the remote operation of the robots 11 around the world. Furthermore, it becomes easy for each remote operator to obtain a job, and meanwhile, labor shortage can be eliminated. Furthermore, because the required level for each task is reduced and the operability is improved, the failure rate of the remote operation is reduced and the quality of the task by remote operation is improved.

For example, the amount and time of tasks to be remotely operated for one robot 11 can be reduced. This can reduce the cost of operating the robot 11.

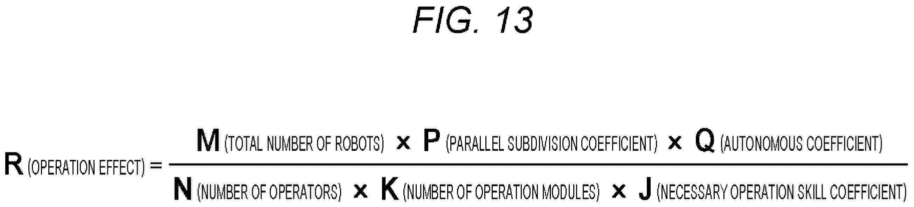

Fig. 13 illustrates an example of a calculation formula of an operation effect R of the remote operation control system 1.

The operation effect R is proportional to the total number M of robots, a parallel subdivision coefficient P, and an autonomous coefficient Q. On the other hand, the operation effect R is inversely proportional to the number N of operators, the number K of operation modules, and a necessary operation skill coefficient J.

The total number M of robots is the total number of robots 11 operating in the remote operation control system 1.

The parallel subdivision coefficient P indicates the degree of parallel subdivision of the task. For example, the more the task is subdivided, the larger the parallel subdivision coefficient P becomes.

The autonomous coefficient Q indicates the degree of autonomy of the robot 11. As a proportion of tasks that can be autonomously executed by the robot 11 increases, the autonomous coefficient Q increases. Normally, the more the task is subdivided, the larger the proportion of the tasks that can be autonomously executed by the robot 11 becomes, and thus, the autonomous coefficient Q increases.

The number N of operators is the total number of remote operators necessary for smoothly operating the robots 11 of the total number M of robots operating in the remote operation control system 1.

The number K of operation modules is the number of task execution modules 141 included in the robot 11. For example, because the robot 11 described above includes four task execution modules 141, which are the interaction module 141a, the observation module 141b, the work module 141c, and the movement module 141d, the number K of operation modules is 4.

The necessary operation skill coefficient J indicates the level of skill necessary for the remote operation for a task, and the necessary operation skill coefficient J increases as the level of skill necessary for the remote operation for a task increases. Normally, the more the task is subdivided, the lower the level of skill necessary for the remote operation for a task becomes, and thus, the necessary operation skill coefficient J decreases. Normally, as the number of robots 11 per person increases, the level of skill necessary for the remote operation for a task increases, and thus, the necessary operation skill coefficient J increases.

In the remote operation control system 1, the number N of operators and the number K of operation modules increase to cause the operation effect R to be reduced. On the other hand, the parallel subdivision coefficient P increases, and the necessary operation skill coefficient J decreases. This causes the number of robots 11 that can be operated by each remote operator to increase, and enables the total number M of robots to be greatly increased. Therefore, the operation effect R can be increased as a whole.

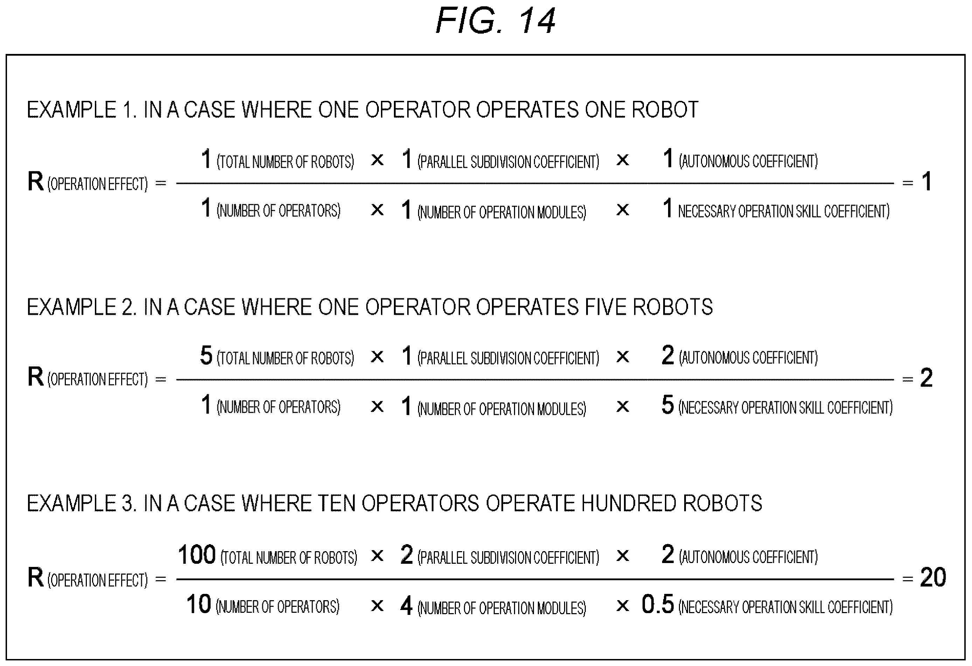

Fig. 14 illustrates a specific example of the operation effect R.

Example 1 illustrates an example in a case where one remote operator operates one robot 11. In this case, the operation effect R is 1, and this value is a reference value of the operation effect R.

Note that, in Example 1, the number of remote operators is one, and the task execution module of the robot 11 is not necessarily divided, and thus, an example is illustrated in which the number K of operation modules is 1.

Example 2 illustrates an example in a case where one remote operator operates five robots 11. In this case, the autonomous coefficient Q of the robot 11 needs to be increased in order to suppress an increase in necessary operation skill coefficient J. However, even if the autonomous coefficient Q is increased, one remote operator needs to operate the five robots for the entire time, and thus, the necessary operation skill coefficient J increases. Then, in the case of this example, the value of the operation effect R becomes 2.

Note that, in Example 2, similarly to Example 1, the number of remote operators is one, and the task execution module of the robot 11 is not necessarily divided, and thus, an example is illustrated in which the number K of operation modules is 1.

Example 3 illustrates an example in a case where 10 remote operators operate 100 robots 11 in the remote operation control system 1. In this case, because each robot 11 includes four task execution modules 141, the number K of operation modules is 4. Then, as the number K of operation modules increases, the degree of parallel subdivision of the task increases, the parallel subdivision coefficient P increases, and the necessary operation skill coefficient J decreases. This causes the value of the operation effect R to be increased from 2 to 20 as compared with Example 2. That is, a large number of robots can be operated while the number of remote operators are suppressed, and the operation effect is improved.

### << 2. Modifications >>

Hereinafter, modifications of the above-described embodiment of the present technology will be described.

For example, the classification of the skills (task execution modules) of the robot 11 can be changed as appropriate.

For example, after the server 13 executes the matching processing and controls connection between the robot 11 to be a remote operation target and the operation terminal 12 of the remote operator, the robot 11 and the operation terminal 12 may directly communicate with each other without interposing the server 13 and perform the remote operation.

For example, the robot 11 can execute the matching processing by itself on the basis of the remote operator database or the like and request (the operation terminal 12 of) the selected remote operator to perform the remote operation. In this case, for example, the robot 11 may generate the remote operator database, or may acquire the remote operator database from the outside.

The present technology can be applied to an autonomous mobile body that can be remotely operated other than a robot. For example, the present technology can be applied to vehicles such as cars and drones that can be operated remotely and autonomously. For example, the present technology can be applied to a manipulator or the like that does not move but can remotely or autonomously move a portion such as a hand.

### << 3. Others >>

### <Configuration example of computer>

The above-described series of processing can be executed by hardware or software. In a case where the series of processing is executed by software, a program that configures the software is installed in a computer. Here, examples of the computer include a computer incorporated in dedicated hardware, a computer that can execute various functions by installation of various programs, for example, a general-purpose personal computer, and the like.

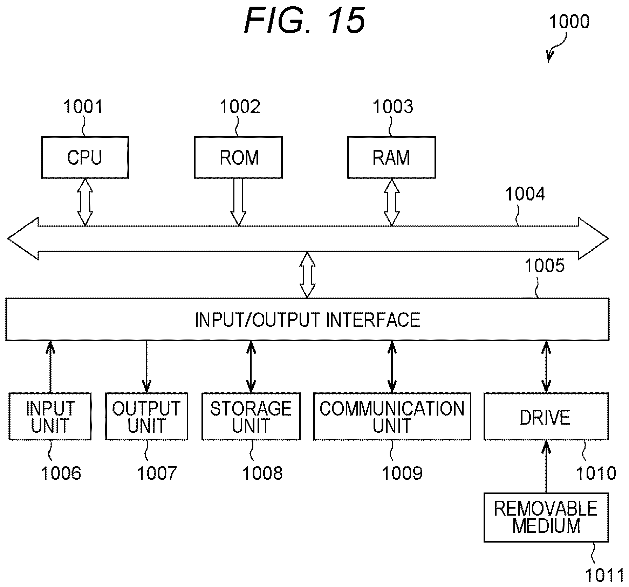

Fig. 15 is a block diagram illustrating a configuration example of hardware of a computer that executes the above-described series of processing by a program.

In a computer 1000, a central processing unit (CPU) 1001, a read only memory (ROM) 1002, and a random access memory (RAM) 1003 are interconnected via a bus 1004.

An input/output interface 1005 is further connected to the bus 1004. An input unit 1006, an output unit 1007, a storage unit 1008, a communication unit 1009, and a drive 1010 are connected to the input/output interface 1005.

The input unit 1006 includes an input switch, a button, a microphone, an imaging element, or the like. The output unit 1007 includes a display, a speaker, or the like. The storage unit 1008 includes a hard disk, a non-volatile memory, or the like. The communication unit 1009 includes a network interface or the like. The drive 1010 drives a removable medium 1011 such as a magnetic disk, an optical disc, a magneto-optical disk, or a semiconductor memory.

In the computer 1000 configured as described above, the series of processing described above is performed, for example, by the CPU 1001 loading a program stored in the storage unit 1008 into the RAM 1003 via the input/output interface 1005 and the bus 1004 and executing the program.

The program executed by the computer 1000 (CPU 1001) can be provided by being recorded in the removable medium 1011 as, for example, a package medium or the like. Furthermore, the program can be provided via a wired or wireless transmission medium such as a local area network, the Internet, or digital satellite broadcasting.

In the computer 1000, the program can be installed in the storage unit 1008 via the input/output interface 1005 by having the removable medium 1011 attached to the drive 1010. Furthermore, the program can be received by the communication unit 1009 by means of the wired or wireless transmission medium to be installed in the storage unit 1008. Alternatively, the program can be installed in the ROM 1002 or the storage unit 1008 in advance.

Note that the program to be executed by the computer may be a program that executes processing in time series in accordance with an order described in the present description, or may be a program that executes processing in parallel or at a necessary timing such as when a call is made.

Furthermore, in the present description, a system means a set of a plurality of constituent elements (apparatuses, modules (components), or the like), and it does not matter whether or not all the constituent elements are in the same housing. Therefore, a plurality of apparatuses housed in separate housings and connected to each other via a network, and one apparatus including a plurality of modules housed in one housing, are both systems.

Moreover, the embodiment of the present technology is not limited to the above-described embodiment, and various modifications can be made without departing from the gist of the present technology.

For example, the present technology may be embodied in cloud computing in which one function is shared and processed by a plurality of apparatuses in cooperation via a network.

Furthermore, each step described in the flowcharts described above can be executed by one apparatus or can be shared and executed by a plurality of apparatuses.

Moreover, in a case where a plurality of pieces of processing is included in one step, the plurality of pieces of processing included in the one step can be executed by one apparatus or executed by a plurality of apparatuses in a shared manner.

### <Combination example of configuration>

The present technology can also be configured as follows.
(1) An information processing apparatus including:
   a matching unit that performs matching of, among tasks obtained by decomposing an action of an autonomous mobile body, a non-autonomous task that is the task not autonomously performed by the autonomous mobile body with a remote operator who performs a remote operation of the non-autonomous task; and
   a remote control unit that controls the remote operation of the non-autonomous task by the remote operator.
(2) The information processing apparatus according to the above (1), in which
   the remote control unit receives remote operation content information indicating content of remote operation by the remote operator from an operation terminal operated by the remote operator, and transmits the received remote operation content information to the autonomous mobile body.
(3) The information processing apparatus according to the above (2), in which
   the remote control unit provides a user interface used to perform remote operation of the non-autonomous task to an operation terminal.
(4) The information processing apparatus according to the above (3), in which
   the remote control unit provides the user interface including a virtual space simulating an environment in which the action is executed to the operation terminal.
(5) The information processing apparatus according to the above (3), in which
   the remote control unit provides the user interface irrelevant to an environment in which the action is executed to the operation terminal.
(6) The information processing apparatus according to the above (1), in which
   the remote control unit controls connection between the autonomous mobile body and an operation terminal operated by the remote operator.
(7) The information processing apparatus according to any one of the above (1) to (6), in which
   the matching unit performs matching of the non-autonomous tasks of a plurality of the autonomous mobile bodies with a plurality of the remote operators.
(8) The information processing apparatus according to any one of the above (1) to (7), in which
   the non-autonomous task is classified by each of skills, and
   the matching unit matches the non-autonomous task with the remote operator who can perform remote operation of a skill related to the non-autonomous task.
(9) The information processing apparatus according to the above (8), in which
   the skill includes interaction, observation, work, and movement.
(10) The information processing apparatus according to any one of the above (1) to (9), in which
   the non-autonomous task is a task decomposed into a level irrelevant to a context in which the action is executed.
(11) The information processing apparatus according to any one of the above (1) to (10), in which
   the non-autonomous task includes the task that the autonomous mobile body cannot autonomously execute and the task that the autonomous mobile body has failed to autonomously execute.
(12) The information processing apparatus according to any one of the above (1) to (11), in which
   the matching unit updates at least one of information regarding the remote operator and information regarding the non-autonomous task on the basis of execution content of the non-autonomous task by the remote operation.
(13) A remote operation control method
   causing an information processing apparatus to perform:
   matching of, among tasks obtained by decomposing an action of an autonomous mobile body, a non-autonomous task that is the task not autonomously performed by the autonomous mobile body with a remote operator who performs a remote operation of the non-autonomous task; and
   control of the remote operation of the non-autonomous task by the remote operator.
(14) A remote operation control system including:
   a plurality of autonomous mobile bodies; and
   an information processing apparatus, in which
   the information processing apparatus includes:
      a matching unit that performs matching of, among tasks obtained by decomposing an action of each of the autonomous mobile bodies, a non-autonomous task that is the task not autonomously performed by the autonomous mobile body with a remote operator who performs a remote operation of the non-autonomous task; and
      a remote control unit that controls the remote operation of the non-autonomous task by the remote operator.
(15) An autonomous mobile body including:
   an action planning unit that decomposes an action to be executed into a plurality of tasks; and
   an action control unit that controls autonomous execution of an autonomous task that is autonomously executed among the tasks and controls execution of a non-autonomous task that is not autonomously executed among the tasks by remote operation.
(16) The autonomous mobile body according to the above (15), including
   a plurality of task execution modules each corresponding to a different one of skills; in which
   each of the task execution modules executes the autonomous task associated with a corresponding skill and executes the non-autonomous task associated with a corresponding skill by remote operation.
(17) The autonomous mobile body according to the above (16), in which
   the action control unit classifies the non-autonomous task by each of the skills and requests an outside to perform a remote operation of the non-autonomous task.
(18) The autonomous mobile body according to any one of the above (15) to (17), in which
   the non-autonomous task includes the task that the autonomous mobile body cannot autonomously execute and the task that the autonomous mobile body has failed to autonomously execute.
(19) The autonomous mobile body according to any one of the above (15) to (18), in which
   the action planning unit decomposes the action into the task at a level irrelevant to a context in which the action is executed.
(20) The autonomous mobile body according to any one of the above (15) to (19), further including
   a learning unit that learns an autonomous execution method of the non-autonomous task on the basis of execution content of the non-autonomous task by remote operation.

Note that the effects described in the present description are merely examples and are not limited, and other effects may be provided.

### REFERENCE SIGNS LIST

- 1: Remote operation control system
- 11-1 to 11-m: Robot
- 12-1 to 12-m: Operation terminal
- 13: Server
- 21: Network
- 101: Information processing unit
- 102: Input unit
- 103: Sensing unit
- 104: Communication unit
- 111: Action module
- 112: Task execution module group
- 121: Action planning unit
- 122: Action control unit
- 123: Learning unit
- 131: State recognition unit
- 132: Autonomous action control unit
- 133: Remote action control unit
- 141a: Interaction module
- 141b: Observation module
- 141c: Work module
- 141d: Movement module
- 151a to 151d: Execution unit
- 152a to 152d: Learning unit
- 161a: Autonomous interaction unit
- 161b: Autonomous observation unit
- 161c: Autonomous work unit
- 161d: Autonomous movement unit
- 162a: Remote interaction unit
- 162b: Remote observation unit
- 162c: Remote work unit
- 162d: Remote movement unit
- 302: Information processing unit
- 311: Remote control unit
- 312: Matching unit

## Claims

1. An information processing apparatus comprising:
a matching unit that performs matching of, among tasks obtained by decomposing an action of an autonomous mobile body, a non-autonomous task that is the task not autonomously performed by the autonomous mobile body with a remote operator who performs a remote operation of the non-autonomous task; and
a remote control unit that controls the remote operation of the non-autonomous task by the remote operator.

2. The information processing apparatus according to claim 1, wherein
the remote control unit receives remote operation content information indicating content of remote operation by the remote operator from an operation terminal operated by the remote operator, and transmits the received remote operation content information to the autonomous mobile body.

3. The information processing apparatus according to claim 2, wherein
the remote control unit provides a user interface used to perform remote operation of the non-autonomous task to an operation terminal.

4. The information processing apparatus according to claim 3, wherein
the remote control unit provides the user interface including a virtual space simulating an environment in which the action is executed to the operation terminal.

5. The information processing apparatus according to claim 3, wherein
the remote control unit provides the user interface irrelevant to an environment in which the action is executed to the operation terminal.

6. The information processing apparatus according to claim 1, wherein
the remote control unit controls connection between the autonomous mobile body and an operation terminal operated by the remote operator.

7. The information processing apparatus according to claim 1, wherein
the matching unit performs matching of the non-autonomous tasks of a plurality of the autonomous mobile bodies with a plurality of the remote operators.

8. The information processing apparatus according to claim 1, wherein
the non-autonomous task is classified by each of skills, and
the matching unit matches the non-autonomous task with the remote operator who can perform remote operation of a skill related to the non-autonomous task.

9. The information processing apparatus according to claim 8, wherein
the skill includes interaction, observation, work, and movement.

10. The information processing apparatus according to claim 1, wherein
the non-autonomous task is a task decomposed into a level irrelevant to a context in which the action is executed.

11. The information processing apparatus according to claim 1, wherein
the non-autonomous task includes the task that the autonomous mobile body cannot autonomously execute and the task that the autonomous mobile body has failed to autonomously execute.

12. The information processing apparatus according to claim 1, wherein
the matching unit updates at least one of information regarding the remote operator and information regarding the non-autonomous task on a basis of execution content of the non-autonomous task by the remote operation.

13. A remote operation control method
causing an information processing apparatus to perform:
matching of, among tasks obtained by decomposing an action of an autonomous mobile body, a non-autonomous task that is the task not autonomously performed by the autonomous mobile body with a remote operator who performs a remote operation of the non-autonomous task; and
control of the remote operation of the non-autonomous task by the remote operator.

14. A remote operation control system comprising:
a plurality of autonomous mobile bodies; and
an information processing apparatus, wherein
the information processing apparatus comprises:
a matching unit that performs matching of, among tasks obtained by decomposing an action of each of the autonomous mobile bodies, a non-autonomous task that is the task not autonomously performed by the autonomous mobile body with a remote operator who performs a remote operation of the non-autonomous task; and
a remote control unit that controls the remote operation of the non-autonomous task by the remote operator.

15. An autonomous mobile body comprising:
an action planning unit that decomposes an action to be executed into a plurality of tasks; and
an action control unit that controls autonomous execution of an autonomous task that is autonomously executed among the tasks and controls execution of a non-autonomous task that is not autonomously executed among the tasks by remote operation.

16. The autonomous mobile body according to claim 15, comprising
a plurality of task execution modules each corresponding to a different one of skills; wherein
each of the task execution modules executes the autonomous task associated with a corresponding skill and executes the non-autonomous task associated with a corresponding skill by remote operation.

17. The autonomous mobile body according to claim 16, wherein
the action control unit classifies the non-autonomous task by each of the skills and requests an outside to perform a remote operation of the non-autonomous task.

18. The autonomous mobile body according to claim 15, wherein
the non-autonomous task includes the task that the autonomous mobile body cannot autonomously execute and the task that the autonomous mobile body has failed to autonomously execute.

19. The autonomous mobile body according to claim 15,
wherein
the action planning unit decomposes the action into the task at a level irrelevant to a context in which the action is executed.

20. The autonomous mobile body according to claim 15, further comprising
a learning unit that learns an autonomous execution method of the non-autonomous task on a basis of execution content of the non-autonomous task by remote operation.
